# EUROPÄISCHE PATENTSCHRIFT

(11) **EP 2 331 371 B1**
(45) Veröffentlichungstag und Bekanntmachung des Hinweises auf die Patenterteilung: **14.10.2015**
(21) Anmeldenummer: 09740052.7
(22) Anmeldetag: 21.09.2009
(51) Int. Cl.: B60S 1/32, B60S 1/34, B60S 1/38, B60S 1/40, B60S 1/52

(54) **WISCHARM/WISCHBLATT-VERBINDUNG, WISCHBLATT SOWIE SCHEIBENWISCHANLAGE**
WIPER ARM/WIPER BLADE CONNECTION, WIPER BLADE AND WINDSCREEN WIPER INSTALLATION
ACCOUPLEMENT ENTRE RACLETTE ET BRAS D'ESSUIE-GLACE, RACLETTE D'ESSUIE-GLACE ET SYSTÈME D'ESSUIE-GLACE

(30) Priorität: 26.09.2008 DE 102008049270
(43) Veröffentlichungstag der Anmeldung: 15.06.2011
(73) Patentinhaber: Valeo Systèmes d'Essuyage, 78321 La Verrière (FR)
(72) Erfinder: EGNER-WALTER, Bruno, 74076 Heilbronn (DE); SCHÄUBLE, Michael, 71665 Vaihingen / Enz (DE)
(86) Internationale Anmeldenummer: PCT/EP2009/006801
(87) Internationale Veröffentlichungsnummer: WO 2010/034447

(56) Entgegenhaltungen:
- DE-A1-102004 056 835
- DE-A1-102005 030 972
- DE-U- 1 989 712
- GB-A- 644 048
- JP-U- 54 118 737

## Beschreibung

Die Erfindung bezieht sich auf eine Wischarm/Wischblatt-Verbindung bei Scheibenwischanlagen für Fahrzeuge gemäß Oberbegriff Patentanspruch 1, auf ein Wischblatt gemäß Oberbegriff Patentanspruch 16 sowie eine Scheibenwischanlage gemäß Oberbegriff Patentanspruch 20.

Wischblätter zur Verwendung bei Scheibenwischanlagen von Fahrzeugen sind in unterschiedlichen Ausführungen bekannt. Bekannt sind insbesondere auch flache Wischblätter (DE 10 2004 056 835 A1, DE 100 00 372 A1), die generell aus einem sich in Wischblattlängsrichtung erstreckenden und eine Wischlippe bildenden Wischgummi aus einem gummielastischen Material sowie aus einem leistenartigen oder profilschienenförmigen Wischblattkörper (Wischleiste) mit wenigstens einer Federschiene bestehen, an welchem (Wischblattkörper) der Wischgummi gehalten ist. Über einen Wischblattadapter ist das jeweilige Wischblatt lösbar mit dem Wischarm der Scheibenwischanlage verbunden, wobei der jeweilige Wischblattadapter wenigstens zweiteilig ausgeführt ist, und zwar bestehend aus einem zumindest im montierten Zustand mit dem Wischarm verbundenen wischarmseitigen Adapterteil und aus einem am Wischblatt vorgesehenen wischblattseitigen Adapterteil, welches das Wischblatt bzw. dessen Wischblattkörper und/oder die Federschiene und/oder den Wischgummi an der Wischblattoberseite reiterartig übergreift. An wenigstens einer Wischblattlängsseite ist bei diesen bekannten flachen Wischblättern ein Spritz- oder Verteilerkanal mit einer Vielzahl von Düsenöffnungen zum Ausbringen einer Reinigungs- oder Waschflüssigkeit auf die Fahrzeugscheibe vorgesehen. Über einen wischblattseitigen, d.h. am Wischblattadapter vorgesehenen Fluid- oder Flüssigkeitsanschluss ist der wenigstens eine Verteiler- oder Spritzkanal an wenigstens eine äußere, in der Regel von einem Schlauch gebildete Flüssigkeitsleitung angeschlossen, über die die Reinigungs- oder Waschflüssigkeit dem Verteiler- oder Spritzkanal von einer fahrzeugseitigen Versorgungseinheit gesteuert zugeführt wird.

Bekannt sind weiterhin elektrisch beheizbare Wischblätter (JP 10329655, DE 19 89 712 U), die allerdings als Bügelwischblätter mit Bügeln oder Bügelstrukturen ausgeführt sind. Im Bereich des Wischgummis oder des den Wischgummi tragenden Wischblattkörpers (Wischleiste) ist jeweils ein von einem Heizdraht oder einer Heizfolie gebildetes elektrisches Heizelement vorgesehen. Die Zuführung des Heizstromes an das Heizelement erfolgt über wenigstens eine zumindest über eine Teillänge auch entlang des Wischarmes verlaufende elektrische Leitung, mit der das beheizbare Wischblatt dann über eine elektrische Stecker/Buchsenverbindung angeschlossen ist.

"Flache Wischblätter" werden inzwischen auch als "Flachwischblätter" oder "Flachbalkenwischblätter" oder "Gelenkfreie Wischblätter" bezeichnet. Im Sinne der vorliegenden Erfindung bestehen diese flachen Wischblätter generell aus einem Wischgummi mit einer Wischlippe, wobei der Wischgummi an einer Federschiene oder an zwei Federschienen gehalten bzw. befestigt ist und an der Federschiene oder an den Federschienen eine Anschlussvorrichtung bzw. ein Wischblattadapter zum Verbinden mit einem für die Wischbewegung antreibbaren Wischarm angebracht ist. Bei nur einer Federschiene ist diese in einem Längskanal des Wischgummis angeordnet oder auf dem Rücken des Wischgummis befestigt. Bei zwei Federschienen greifen diese in Längsnuten an den gegenüberliegenden langen Außenseiten des Wischgummis ein. Bei einer weiteren generellen Ausbildung flacher Wischblätter ist der Wischgummi mit seinem Rückenteil in einem länglichen elastischen Profilkörper aufgenommen, ebenso eine Federschiene oder mehrere Federschienen. Wenn der Profilkörper selbst mit den erforderlichen Federeigenschaften versehen ist, kann auch auf zusätzliche Federschienen verzichtet werden. Die Anschlussvorrichtung zum Verbinden des Wischblattes mit dem Wischarm ist dann an diesem Profilkörper angebracht. Je nach Verwendungszweck können zusätzliche Elemente, wie Spoiler oder Heizvorrichtungen oder Elemente zur Abgabe von Waschflüssigkeit oder Ähnliches an dem Wischblatt vorgesehen oder angebracht sein.

Gegenteilig zu den flachen Wischblättern sind die so genannten "Bügelwischblätter". Ein typisches Beispiel für Bügelwischblätter ist in der DE 44 15 065 A1 (dortige Figur 1) dargestellt. Bügelwischblätter besitzen ein aus waagebalkenartig über Gelenke miteinander verbundenen Bügel gebildetes Traggestell, das mit seinem Hauptbügel über einen Wischblattadapter mit dem Wischarm verbindbar ist. Der Wischgummi wird an dem Traggestell gehalten und geführt indem einwärts gerichtete Krallenpaare an den Bügelenden der untersten Hierarchieebene der Bügelkonstruktion in Nuten an den Längsseiten des Wischgummis eingreifen. In den Wischgummi eingelegte Federschienen sorgen für eine Vergleichmäßigung der über die Bügel auf den Wischgummi übertragen Anpresskraft.

Eine gattungsgeässe Wischarm/Wischblatt-Verbindung, ein gattungsgemässes Wischblatt und eine gattungsgemässe Scheibenwischanlage sind aus dem Dokument DE102004056835 bekannt.

Aufgabe der Erfindung ist es, eine Wischarm/Wischblatt-Verbindung aufzuzeigen, die als mechanische, hydraulische und zugleich auch elektrische Verbindung ein vereinfachtes Anschließen und Trennen eines elektrisch beheizbaren und zugleich mit Spritzdüsen zum Ausbringen einer Reinigungs- oder Waschflüssigkeit auf die Fahrzeugscheibe versehenen Wischblattes am Wischarm bzw. vom Wischarm ermöglicht. Zur Lösung dieser Aufgabe ist eine Wischblatt/Wischarm-Verbindung entsprechend dem Patentanspruch 1 ausgebildet.

Aufgabe der Erfindung ist weiterhin, ein Wischblatt aufzuzeigen, welches Spritzdüsen oder -öffnungen zum Ausbringen der Wasch- oder Reinigungsflüssigkeit auf die Fahrzeugscheibe aufweist, elektrisch beheizbar ist und problemlos an einem Wischarm einer Scheibenwischanlage befestigbar und von diesem abnehmbar ist. Zur Lösung dieser Aufgabe ist ein Wischblatt entsprechend dem Patentanspruch 16 ausgebildet.

Aufgabe der Erfindung ist weiterhin auch, eine Scheibenwischanlage mit wenigstens einem beheizbaren und Spritzdüsen oder -Öffnungen zum Ausbringen der Wasch- oder Reinigungsflüssigkeit auf die Fahrzeugscheibe aufweisenden Wischblatt aufzuzeigen, welches problemlos an einem Wischarm einer Scheibenwischanlage befestigbar und von diesem abnehmbar ist, wobei vorzugsweise mit einfachen Mitteln zugleich auch ein Beheizen der wenigstens einen Versorgungs- oder Flüssigkeitsleitung für die Reinigungs- oder Waschflüssigkeit erreicht ist. Zur Lösung dieser Aufgabe ist eine Scheibenwischanlage entsprechend dem Patentanspruch 20 ausgebildet.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen erläutert. Es zeigen:

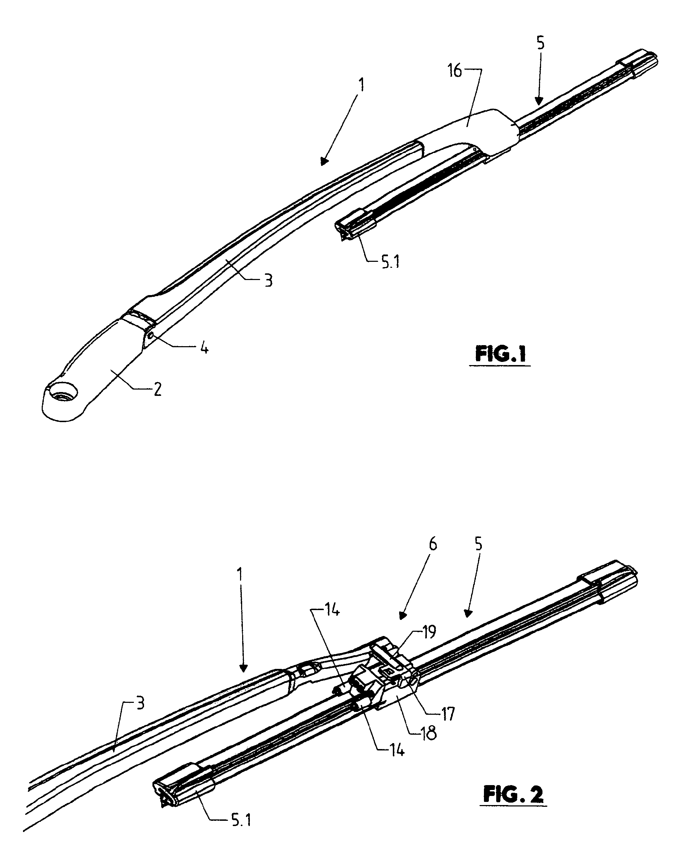

- Fig. 1: in perspektivischer Darstellung den Wischarm einer Scheibenwischanlage für Fahrzeuge, zusammen mit dem am Wischarm lösbar befestigten flachen Wischblatt;
- Fig. 2: eine Darstellung wie Figur 1, jedoch bei abgenommener Abdeckung im Bereich des das Wischblatt mit dem Wischarm verbindenden Wischblattadapters;
- Fig. 3: in vereinfachter Darstellung einen Schnitt durch das flache Wischblatt der Figuren 1 und 2;
- Fig. 4: einen Schnitt durch den Wischarm bzw. durch die Wischstange des Wischarmes der Figuren 1 und 2;
- Fig. 5: in perspektivischer Darstellung das wischblattseitige Adapterteil des Wischblattadapters, zusammen mit einer elektrisch-hydraulischen Kupplungseinheit;
- Fig. 6: eine Draufsicht auf die Anordnung der Figur 5;
- Fig. 7 und 8: Schnitte entsprechend der Schnittlinien A - A bzw. B - B der Figur 6;
- Fig. 9 und 10: das wischblattseitige Adapterteil in unterschiedlichen Stirnansichten;
- Fig. 11 und 12: in unterschiedlichen perspektivischen Ansichten das wischblattseitige Adapterteil zusammen mit der von diesem Adapterteil abgenommenen Kupplungseinheit;
- Fig. 13: eine Draufsicht auf die Anordnung der Figuren 11 bzw. 12;
- Fig. 14 und 15: Schnitte entsprechend der Schnittlinie C - C bzw. D - D der Figur 13;
- Fig. 16: in schematischer perspektivischer Darstellung den Verlauf einer elektrischen, von einem Heizdraht gebildeten Anschlussleitung innerhalb der Kupplungseinheit;
- Fig. 17: in perspektivischer Einzeldarstellung die elektrisch-hydraulische Kupplungseinheit bei einer weiteren Ausführungsform der Erfindung;
- Fig. 18: in einer Darstellung ähnlich Figur 16 den Verlauf der elektrischen, von einem Widerstandsdraht gebildeten Anschluss-Leitung in der Kupplungseinheit der Figur 17;
- Fig. 19 und 20: Darstellungen wie Figuren 17 und 18 bei einer weiteren Ausführungsform der Erfindung;
- Fig. 21 und 22: in unterschiedlichen perspektivischen Darstellungen das wischblattseitige Adapterteil zusammen mit einer elektrischen und hydraulischen Kupplungseinheit bei einer weiteren Ausführungsform der Erfindung;
- Fig. 23: eine Draufsicht auf die Anordnung der Figuren 21 und 22;
- Fig. 24 und 25: Schnitte entsprechend den Linien E - E bzw. F - F der Figur 23;
- Fig. 26 - 29: jeweils in schematischer Darstellung den Verlauf der elektrischen Anschluss-Leitungen und den Anschluss des wischblattseitigen Heizelementes bei unterschiedlichen Ausführungsformen der Erfindung;
- Fig. 30 und 31: Schnitte durch weitere flache Wischblätter.

In den Figuren ist 1 der Wischarm einer ansonsten nicht weiter dargestellten Scheibenwischanlage für Fahrzeugscheiben (Fahrzeugfrontscheiben). Der Wischarm 1 besteht in bekannter Weise aus einem das eine Ende des Wischarmes 1 bildenden Lagerelement 2, mit dem der Wischarm 1 an einer nicht dargestellten Wischwelle der Scheibenwischanlage befestigt werden kann, sowie aus einem Wischarmelement oder einer Wischstange 3, die über ein Wischarmgelenk 4 mit dem Lagerelement 2 verbunden ist und das andere Ende des Wischarmes 1 bildet, an dem das Wischblatt 5 über einen Wischblattadapter 6 lösbar mit dem Wischarm 1 verbunden ist.

Das Wischblatt 5 ist als flaches beheizbares Wischblatt ausgeführt. Es besteht bei der dargestellten Ausführungsform u.a. aus einer Profilschiene 7, die sich über die gesamte Länge des Wischblattes 5 erstreckt und eine Federschiene 8 umschließt. An der Profilschiene 7 ist der die Wischlippe 9 bildende und sich ebenfalls über die gesamte Länge des Wischblattes 5 erstreckende Wischgummi 10 gehalten. Das Wischblatt 5 ist weiterhin mit zwei sich jeweils über eine Wischblattlängsseite erstreckenden und in der Profilschiene 7 ausgebildeten Verteiler- oder Spritzkanäle 11 und 12 versehen, die jeweils eine Vielzahl von Düsenöffnungen 11.1 bzw. 12.1 zum Ausbringen einer Reinigungs- oder Waschflüssigkeit, beispielsweise zum Ausbringen von Wasser mit Reinigungs- und/oder Frostschutzzusätzen auf die nicht dargestellte Fahrzeugscheibe aufweisen.

Innerhalb der Spritzkanäle 11 und 12 erstreckt sich ein wischblattseitiges Heizelement 13, welches bei der dargestellten Ausführungsform von einem Heizdraht gebildet und derart ausgeführt ist, dass dieses Heizelement 13 wenigstens einen geschlossenen elektrischen Heizstromkreis bildet.

Die Versorgung der Spritzkanäle 11 und 12 mit der Spritz- und Reinigungsflüssigkeit erfolgt über im Wischarm 1 verlegte und von Schlauchleitungen gebildete Flüssigkeitsleitungen 14 mit denen die Spritzkanäle 11 und 12 jeweils im Bereich des Wischblattadapters 6 in der nachstehend noch beschriebenen Weise verbunden sind. Bei der dargestellten Ausführungsform sind zwei Flüssigkeitsleitungen 14 vorgesehen, die z.B. von zwei Kanälen eines Doppelschlauchs gebildet sind. Das Heizelement 13 ist in der nachstehend noch näher beschriebenen Weise im Bereich des Wischblattadapters 6 mit wenigstens einer äußeren u.a. im Wischarm 1 verlaufenden elektrischen Anschlussleitung 15 in der nachstehend noch näher beschriebenen Weise verbunden.

Bei am Wischarm 1 montiertem Wischblatt 5 ist der Wischblattadapter 6 durch eine Blende 16 abgedeckt.

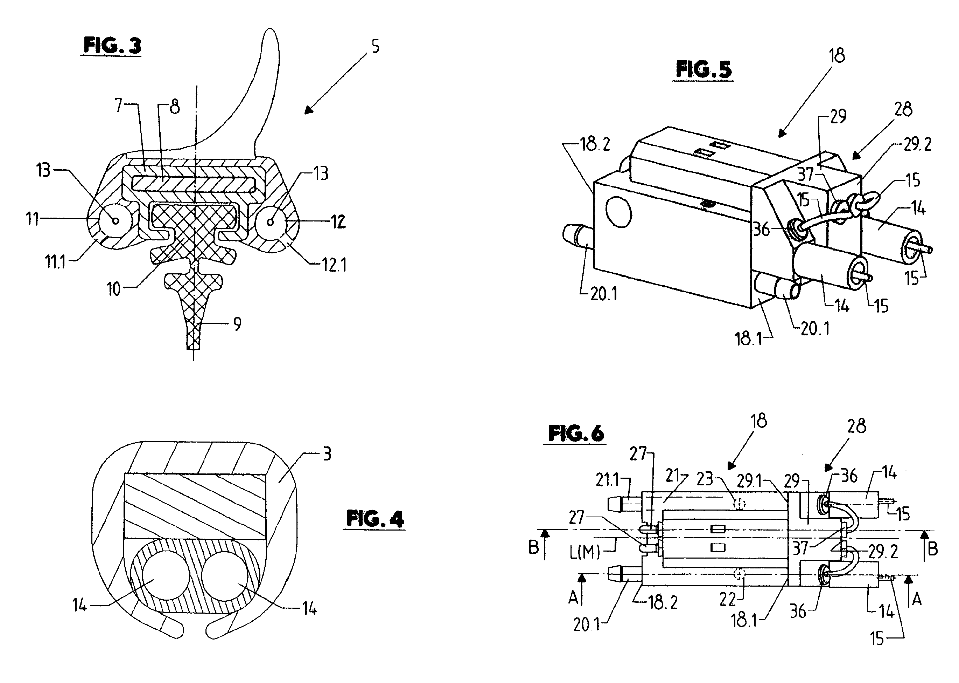

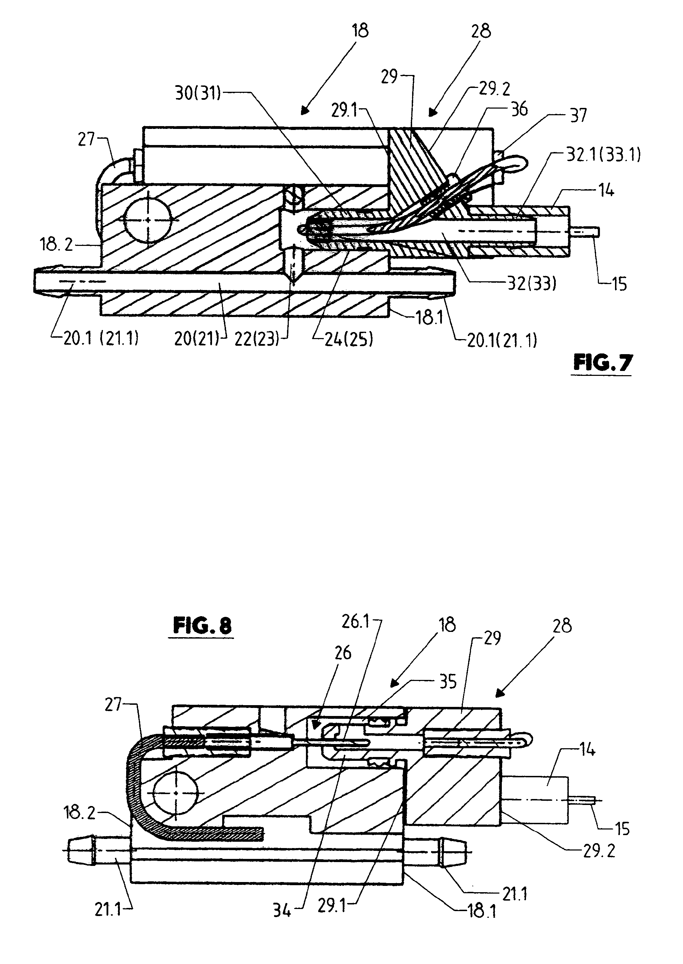

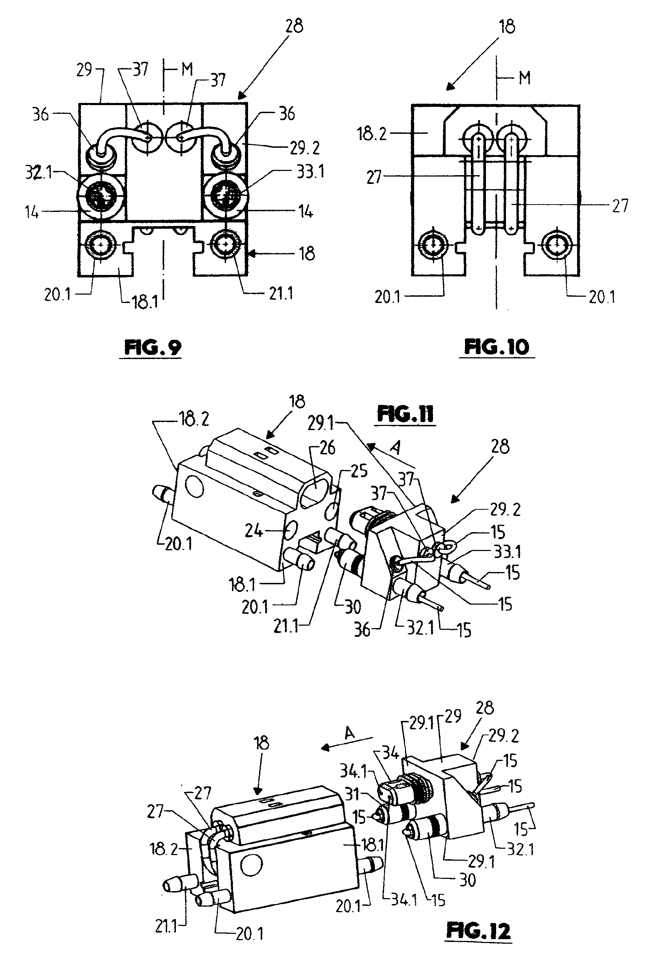

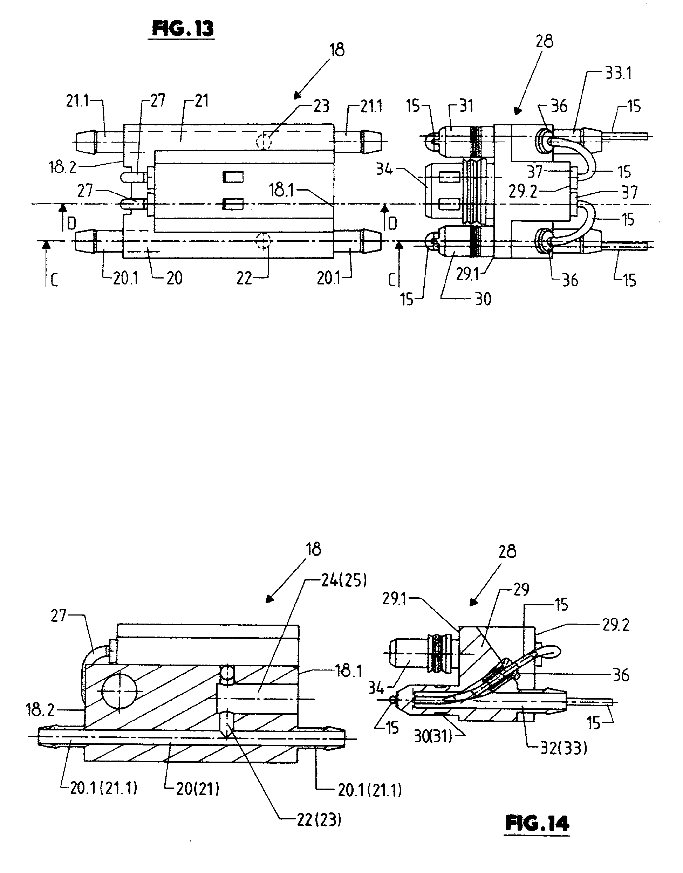

Der Wischblattadapter 6 ist zweiteilig ausgeführt, und zwar bestehend aus einem wischarmseitigen Adapterteil 17 und einem wischblattseitigen, d.h. mit dem Wischblatt fest verbundenem Adapterteil 18. Beide Adapterteile 17 und 18 sind gelenkig miteinander verbunden, so dass das Wischblatt 5 leicht schwenkbar am Wischarm 1 gehalten ist. Das wischblattseitige Adapterteil 18 ist in den Figuren 5 - 16 im Detail dargestellt. Das wischarmseitige Adapterteil 17 ist bei der dargestellten Ausführungsform ist bei der dargestellten Ausführungsform von einem am Wischarm 1 gehaltenen Bügel gebildet, der das wischblattseitige Adapterteil 18 an seiner Oberseite übergreift, und zwar derart, dass dieses Adapterteil 18 und der Wischblatt 5 seitlich vom Wischarm 1 vorgesehen sind. Das Adapterteil 18 ist als Formteil aus Kunststoff im Wesentlichen quaderförmig ausgebildet und das Wischblatt 5 an seiner Oberseite reiterartig übergreifend an diesem Wischblatt 5 befestigt, und zwar etwa in der Wischblattmitte. Im Adapterteil 18 sind u.a. zwei Strömungskanäle 20 und 21 ausgebildet, die sich jeweils an einer Längsseite des Adapterteils 18 in Adapterteillängsrichtung L erstrecken und jeweils beidendig in einem Anschlussstutzen 20.1 bzw. 21.1 enden, über den der jeweilige Strömungskanal mit dem zugehörigen Spritzkanal verbunden ist, und zwar der Spritzkanal 11 mit dem Strömungskanal 20 und der Spritzkanal 12 mit dem Strömungskanal 21. Über eine adapterteilinterne Verbindung 22 bzw. 23 steht jeder Strömungskanal 20 bzw. 21 mit einem eigenen buchsenartigen, d.h. von einer Öffnung gebildeten hydraulischen Anschluss bzw. Flüssigkeits-Anschluss 24 bzw. 25 in Verbindung.

Im Bereich der Oberseite des Adapterteils 18 ist an diesem weiterhin ein elektrischer Anschluss 26 mit zwei steckerartigen Anschlusselementen oder Kontaktstiften vorgesehen, und zwar zum Verbinden des Heizelementes 13 mit den beiden äußeren elektrischen Anschluss-Leitungen 15. Über adapterteilinterne elektrische Verbindungen 27 sind der Anschluss 26 bzw. dessen steckerartige Anschlusselemente mit dem Heizelement 13 verbunden.

Für den elektrischen und hydraulischen Anschluss des Adapterteils 18 bzw. des Wischblattes 5 an die Flüssigkeitsleitungen 14 und die elektrischen Leitungen 15 dient eine elektrisch-hydraulische Kupplungseinheit 28, die im Wesentlichen aus einem Formteil 29 aus Kunststoff besteht, welches an einer gemeinsamen Stirnseite 29.1 zwei über diese Stirnseite wegstehende und mit ihren Achsen parallel zueinander sowie senkrecht zur Ebene der Stirnseite 29.1 orientierte hohlzapfenartige hydraulische Anschlusstücke oder Anschlüsse 30 aufweist, von denen jeder passend und abgedichtet in einen Anschluss 24 bzw. 25 einführbar ist. Der Anschluss 30 ist dabei über einen internen Strömungskanal 32 mit einem Anschlussstutzen 32.1 und der Anschluss 31 über einen internen Strömungskanal 33 mit einem Anschussstutzen 33.1 verbunden. Die Anschlussstutzen 32.1 und 33.1 stehen über die der Stirnseite 29.1 abgewandte Stirnseite 29.2 des Formteils 29 weg und sind jeweils mit einer Flüssigkeitsleitung 14 verbunden. Oberhalb der Anschlüsse 30 und 31 ist an der Stirnseite 29.1 ein über diese Stirnseite weg stehender elektrischer Anschluss 34 vorgesehen, welcher als zweipolige Buchse ausgebildet ist und zwar zur Herstellung einer elektrischen Verbindung mit dem adapterteilseitigen elektrischen Anschluss 26 bzw. mit den dortigen stiftförmigen elektrischen Kontakten 26.1. Der Anschluss 34 ist hierfür in eine Ausnehmung 35 des Adapterteils 18 abgedichtet einführbar, in der die stiftförmigen Kontakte des elektrischen Anschlusses 26 aufgenommen sind.

Die beiden hydraulischen Anschlüsse 24 und 25 sowie der elektrische Anschluss 26 befinden sich an einer gemeinsamen, frei zugänglichen Stirnseite 18.1 des Adapterteils 18, die einem Wischblattende 5.1 zugewandt ist, d.h. bei der dargestellten Ausführungsform dem dem Lagerelement 2 näher liegenden Wischblattende 5.1 des Wischblattes 5. Die beiden hydraulischen Anschlüsse 24 und 25 sowie der elektrische Anschluss 26 sind weiterhin derart vorgesehen, dass das Adapterteil 18 auch in Bezug auf die räumliche Anordnung der hydraulischen Anschlüsse 24 und 25 sowie des elektrischen Anschlusses 26 spiegelsymmetrisch zu einer die Längserstreckung L des Adapterteils 18 einschließenden Mittelebene M ausgebildet ist. Es versteht sich, dass die Anordnung der hydraulischen Anschlüsse 30 und 31 und des elektrischen Anschlusses 34 der Anordnung der Anschlüsse 24 und 25 sowie des elektrischen Anschlusses 26 entspricht, sodass in einem einzigen Fügevorgang (Pfeil A) die hydraulische und elektrische Verbindung des Adapterteils 18 und damit des Wischblattes 5 mit den Flüssigkeitsleitungen 14 und den elektrischen Leitungen 15 herstellbar ist, und zwar durch Aufstecken der Kupplungseinheit 28 auf die Stirnseite 18.1 des Adapterteils 18, oder umgekehrt die hydraulische sowie elektrische Verbindung zwischen dem Adapterteil 18 bzw. dem Wischblatt 5 und den Flüssigkeitsleitungen 14 sowie den elektrischen Leitungen 15 getrennt werden kann, und zwar durch Abziehen des Kupplungsteils vom Adapterteils 18

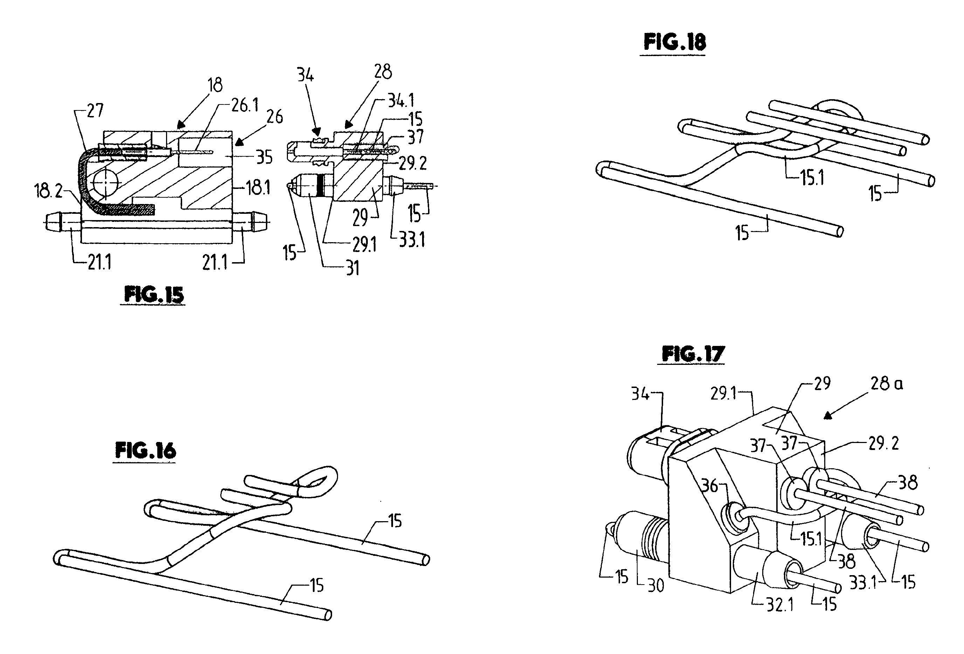

Bei der in den Figuren 5 - 16 dargestellten Ausführungsform verlaufen die äußeren Leitungen 15 innerhalb der Flüssigkeitsleitungen 14 und auch innerhalb der Kupplungseinheit 28 bis jeweils an einen Kontakt des elektrischen Anschlusses 34, und zwar derart, dass jede elektrische Leitung 15 bis an das offene Ende des jeweiligen Anschlusses 30 bzw. 31 reicht, dann um 180° gewendet in den zugehörigen Strömungskanal 32 bzw. 33 zurück geführt und aus diesem Strömungskanal unter Verwendung einer Dichtung 36 an die rückwärtige Stirnseite 29.2 der Kupplungseinheit 28 herausgeführt ist. Anschließend erstreck sich jede Leitung 15 von der Stirnseite 29.2 unter Verwendung einer weiteren Dichtung 37 an den Anschluss 34 bzw. an den zugehörigen Buchsenkontakt dieses Anschlusses. Dieser spezielle Verlauf jeder Anschlussleitung 15 ist in der Figur 16 nochmals im Detail dargestellt. Die Dichtungen 36 und 37 sind bei der dargestellten Ausführungsform aus gummielastischen Material hergestellte hülsenartige Dichtungselemente, die elastisch verformt in entsprechende Ausnehmungen der Kupplungseinheit 28 bzw. des Formteils 29 eingesetzt sind.

Bei der dargestellten Ausführungsform sind die elektrischen Anschlussleitungen 15, die fahrzeugseitig über eine Steuereinheit mit einer elektrischen Spannungs- oder Stromquelle verbunden sind, als Heizelemente ausgeführt und bestehen hierfür im einfachsten Fall jeweils aus einem Heiz- oder Widerstandsdraht, sodass beim Beheizen des Wischblattes 5, d.h. beim Aktivieren des dortigen Heizelementes 13 zugleich auch ein Beheizen der Flüssigkeitsleitungen 14 sowie der Kupplungseinheit 28 und des Adapterteils 18 bzw. der dortigen Flüssigkeitskanäle auf ihrer gesamten Länge erfolgt.

Bei mit dem Adapterteil 18 verbundenem Kupplungseinheit 28 ist somit ein geschlossener Stromkreis für den das Heizelement 13 durchfließenden Heizstrom gebildet, und zwar über eine der äußeren Leitungen 15, über die elektrischen Anschlüsse 34 und 26, über das Heizelement 13 und anschließend über die elektrischen Anschlusses 26 und 34 zurück an die andere Anschlussleitung 15. Nach dem Verbinden der Kupplungseinheit 28 mit dem Adapterteil 18 ist zugleich auch die hydraulische Verbindung zwischen den Flüssigkeitsleitungen 14 und den zugehörigen Spritzkanälen 11 und 12 hergestellt, und zwar insbesondere auch in der Weise, dass diese Spritzkanäle 11 und 12 über die Flüssigkeitsleitungen 14 individuell mit der Reinigungsflüssigkeit versorgt werden können.

Die beschriebene Ausführung gestattet ein einfaches Verbinden des Wischblattes 5 am Wischarm sowie auch ein einfaches Austauschen des Wischblattes 5 bei einfachem Herstellen und Lösen sowohl der hydraulischen als auch der elektrischen Verbindung zwischen dem Adapterteil 18 und der Kupplungseinheit 28.

Die Figuren 17 und 18 zeigen als weitere Ausführungsform eine Kupplungseinheit 28a, die sich von der Kupplungseinheit 28 dadurch unterscheidet, dass die beiden in den Flüssigkeitsleitungen 14 verlaufenden und als Heizelement bzw. als Heizdraht ausgebildeten elektrischen Leitungen 15 an der Kupplungseinheit 28a nicht jeweils mit einem elektrischen Kontakt des elektrischen Anschlusses 34, sondern über einen Leitungsabschnitt 15.1 direkt miteinander verbunden sind, und zwar an der rückwärtigen Stirnseite 29.2 der Kupplungseinheit 28a, sodass zum Beheizen der Flüssigkeitsleitungen 14 ein Heizstromfluss von einer fahrzeugseitigen Versorgungseinheit über eine als Heizelement oder Heizdraht ausgebildete elektrische Leitung an die Kupplungseinheit 28a und dann über den Leitungsabschnitt 15.1 und die andere Leitung 15 zurück an die fahrzeugseitige elektrische Versorgungseinheit möglich ist. Für den Betrieb des Heizelementes 13 sind zwei gesonderte elektrische Leitungen 38 vorgesehen, die ebenfalls über den Wischarm 1 an die fahrzeugseitige elektrische Versorgungseinheit geführt sind und jeweils einen elektrischen Kontakt des Anschlusses 34 mit der fahrzeugseitigen Versorgungseinheit verbinden. Die Figur 18 zeigt nochmals schematisch den Verlauf der elektrischen Leitungen 15 und 38 sowie des Leitungsabschnitts 15.1 im Bereich der Kupplungseinheit 28a. Die Kupplungseinheit 28a wird in gleicher Weise wie die Kupplungseinheit 28 mit dem Adapterteil 18 des Wischblattes 5 verbunden. Ein zusätzlicher Vorteil der Ausführungsform der Figuren 17 und 18 besteht darin, dass das Beheizen des Wischblattes 5 und das Beheizen der beiden Flüssigkeitsleitungen 14 individuell steuerbar ist.

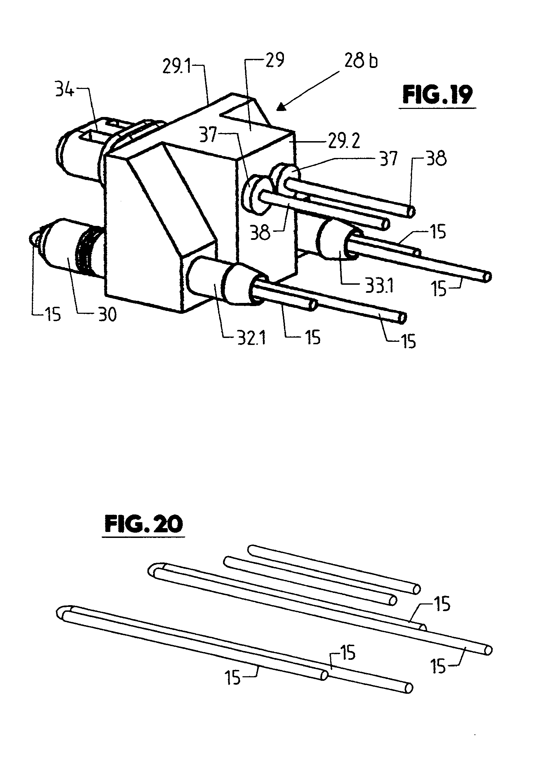

Die Figuren 19 und 20 zeigen eine Ausführungsform, die sich von der Ausführungsform der Figuren 17 und 18 dadurch unterscheidet, dass die als Heizelemente ausgebildeten elektrischen Leitungen 15 in den Flüssigkeitsleitungen 14 jeweils eine eigenständige geschlossene Schlaufe bilden, die bis an das offene Ende des jeweiligen Anschlusses 30 bzw. 31 reicht. Für den Betrieb des Heizelementes 13 sind wiederum die beiden äußeren Leitungen 38 vorgesehen, die den elektrischen Anschluss 34 bzw. dessen Kontakte mit der fahrzeugseitigen Versorgungseinheit verbinden.

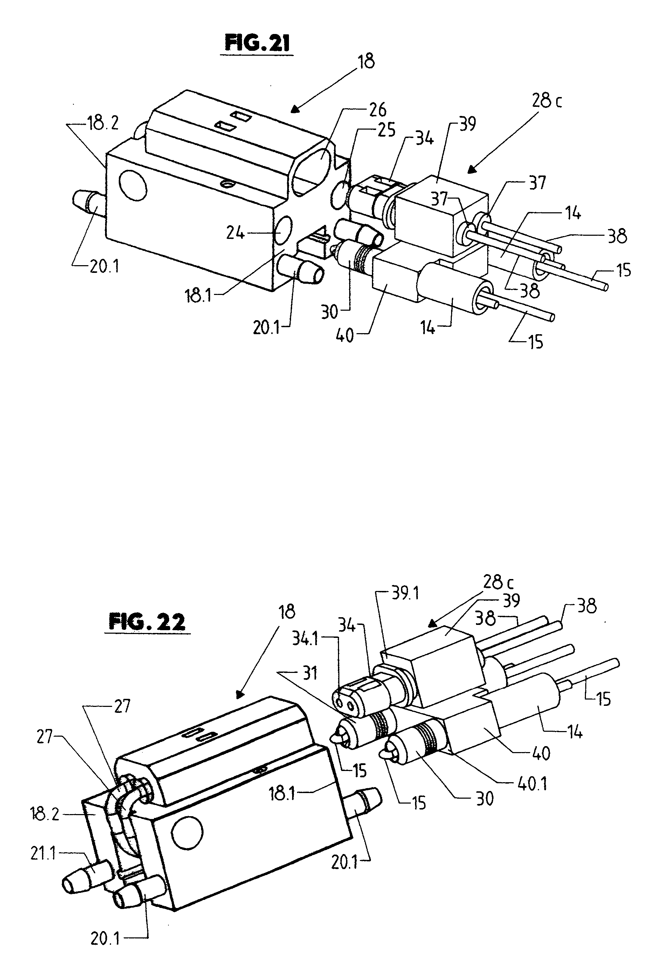

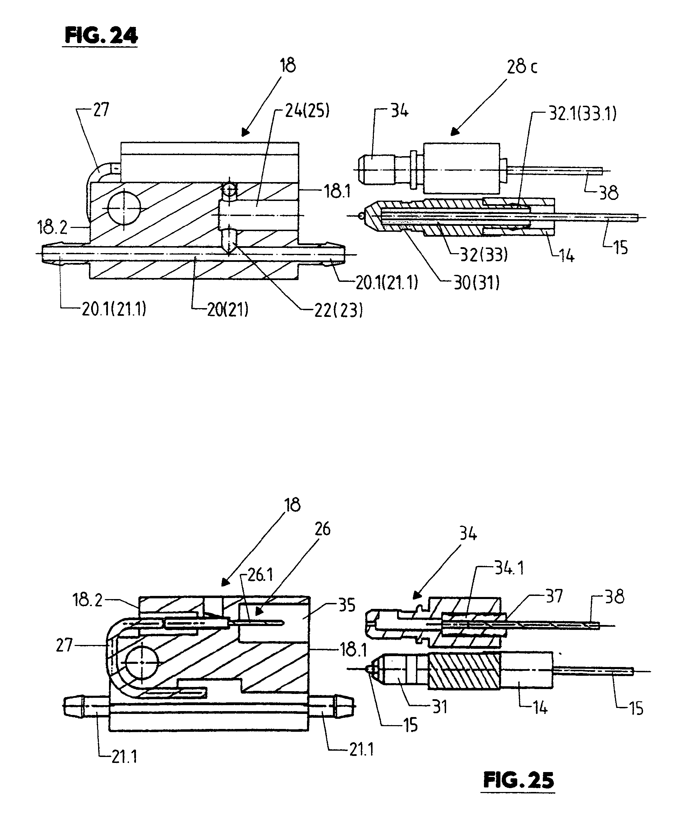

Die Figuren 21 - 25 zeigen eine Ausführungsform, bei der für die elektrische und hydraulische Verbindung eine Kupplungseinheit 28c vorgesehen ist, die zweiteilig ausgebildet ist und aus den beiden Kupplungselementen 39 und 40 besteht. Das Kupplungselement 40, welches für die hydraulische Verbindung oder Flüssigkeitsverbindung vorgesehen ist, weist an einer Stirnseite 40.1 die beiden Anschlüsse 30 und 31 auf und ist an der anderen Stirnseite 40.2 mit den Anschlussstutzen 32.1 bzw. 33.1 versehen, die zum Anschluss der Flüssigkeitsleitungen 14 dienen und über interne Strömungskanäle 32 und 33 mit jeweils einen der hydraulischen Kupplungsstücke 30 und 31 verbunden sind.

Das Kupplungselement 39 ist an einer Stirnseite 39.1 mit dem die beiden Buchsenkontakte aufweisenden elektrischen Anschluss 34 versehen, welcher über die Stirnseite 39.1 vorsteht. An der anderen, gegenüberliegenden Stirnseite 39.2 sind aus dem Kupplungselement abgedichtet die beiden äußeren Versorgungsleitungen 38 für den Betrieb des Heizelementes 13 herausgeführt. Zum Beheizen der Flüssigkeitsleitungen 14 dienen wiederum die als Heizelement oder Heizdrähte ausgeführten Leitungen 15, die bei dieser Ausführungsform ebenfalls in jeder Flüssigkeitsleitungen 14 eine geschlossene Schlaufe bilden, die bis an das offene Ende jedes hydraulischen Anschlusses 30 bzw. 31 reicht. Abweichend von den vorstehend beschriebenen Ausführungsformen ist es bei der in den Figuren 21 - 25 dargestellten Ausführungsform erforderlich, für die Herstellung und für das Lösen der hydraulischen und elektrischen Verbindung die beiden Kupplungselemente 39 und 40 jeweils gesondert mit dem Adapterteil 18 zu verbinden bzw. von diesem Adapterteil zu lösen.

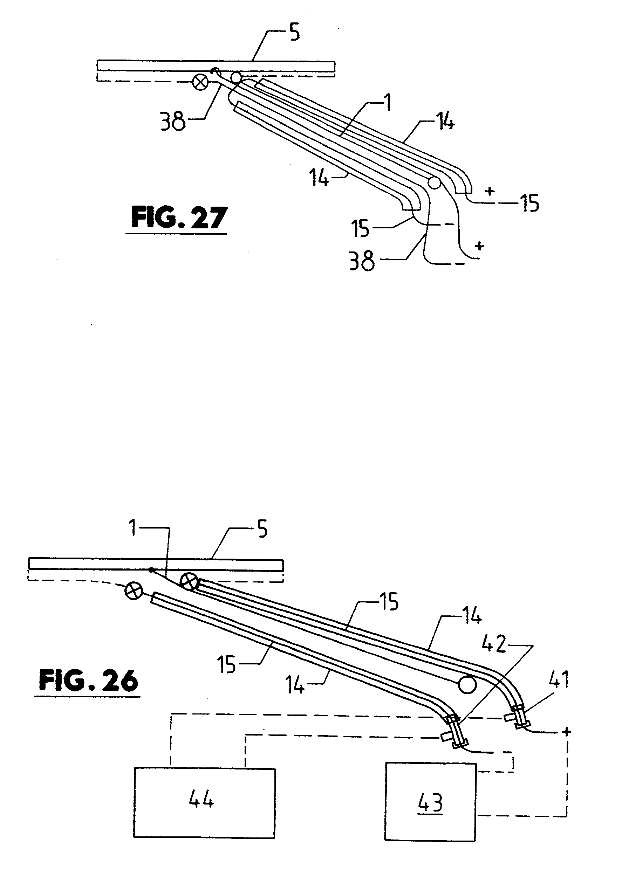

Die Figur 26 zeigt nochmals in sehr vereinfachter schematischer Darstellung den Wischarm 1 und das an dem freien Ende des Wischarmes befestigte Wischblatt 5 mit dem wischblattseitigen Heizelement 13 und der zum Betrieb des Heizelementes 13 dienenden äußeren Leitungen 15, die bei dieser Ausführungsform wieder als elektrische Heizelemente bzw. Heizdrähte ausgeführt sind und in den Flüssigkeitsleitungen 14 zum Zuführen der Wasch- und Reinigungsflüssigkeit an das Wischblatt 5 bzw. an die dortigen Spritzkanäle 11 und 12 verlaufen. Fahrzeugseitig sind die beiden elektrischen Leitungen 15 an Kupplungsstücken 41 und 42 abgedichtet aus den Flüssigkeitsleitungen 14 herausgeführt und mit einer fahrzeugseitigen Steuereinrichtung 43 verbunden, über die das elektrische Heizelement 13 sowie auch die beiden als Heiz- oder Widerstandsdrähte ausgebildeten Leitungen 15 im aktivierten Zustand gesteuert mit einem Heizstrom aus dem Bordnetz des Fahrzeugs beaufschlagt werden. Im einfachsten Fall ist die Steuereinrichtung 43 ein Ein- und Aus-Schalter oder ein entsprechender Schaltkreis. Grundsätzlich besteht auch die Möglichkeit, die Steuereinrichtung 43 als komplexere Einheit auszubilden, die dann beispielsweise den die Leitungen 15 und das elektrische Heizelement 13 durchströmenden Heizstrom und damit die Heizleistung in Abhängigkeit von Umgebungsparametern und/oder Betriebsparametern des Fahrzeugs, beispielsweise in Abhängigkeit von der Außentemperatur und/oder der Fahrzeuggeschwindigkeit und/oder der Geschwindigkeit der Schwenkbewegung des Wischarmes 1 steuert oder regelt. Die in der Figur 26 dargestellte Ausführungsform entspricht somit der Ausführungsform, wie sie vorstehend im Zusammenhang mit den Figuren 5 - 16 beschrieben wurde.

Über die Kupplungsstücke 41 und 42 sind die beiden Flüssigkeitsleitungen 14 fahrzeugseitig mit jeweils einem Ausgang einer dortigen, in der Figur 26 nur sehr schematisch angedeuteten Versorgungseinheit 44 für die Wasch- und Reinigungsflüssigkeit verbunden, und zwar derart, dass über die jeweilige Flüssigkeitsleitung 14 jeder Spritzkanal 11 bzw. 12 des betreffenden Wischblattes 5 auch individuell gesteuert mit der Wasch- und Reinigungsflüssigkeit versorgt werden kann, und zwar beispielsweise in der Form, dass die Reinigungs- und Spritzflüssigkeit während des Wischbetriebes aus den Düsenöffnungen 11.1 bzw. 12.2 dem Wischblatt 5 bzw. der Wischlippe 9 vorauseilend auf die Fahrzeugscheibe aufgebracht wird.

Die Figur 27 zeigt eine Ausführungsform, bei der das wenigstens eine elektrische Heizelement 13 des jeweiligen Wischblattes 5 über eigenständige äußere elektrische Leitungen 38 betrieben wird und die beiden in den Flüssigkeitsleitungen 14 verlaufenden elektrischen Leitungen 15 als elektrische Heizelemente bzw. Heiz- oder Widerstandsdrähte ausgeführt sind und im Bereich des Wischblattes 5 über eine elektrische Brücke miteinander verbunden sind. Die beiden fahrzeugseitigen Enden der elektrischen Leitungen 15 und 38 sind entweder mit einem gemeinsamen Ausgang oder aber mit separaten Ausgängen der Steuereinrichtung 43 verbunden, sodass im ersten Fall das Beheizen des Wischblattes 5 durch das Heizelement 13 und das Beheizen der Flüssigkeitsleitungen 14 durch die als Heizelement oder Heizdrähte ausgebildeten Leitungen 15 gemeinsam gesteuert oder geregelt wird oder aber im zweiten Fall eine individuelle Steuerung oder Regelung der Heizleistung des Heizelementes 13 im Wischblatt 5 und des von den Leitungen 15 gebildeten Heizelementes möglich ist. Diese Ausführung entspricht im Wesentlichen der vorstehend im Zusammenhang mit den Figuren 17 und 18 beschriebenen Ausführungsform.

Allen zuvor beschriebenen Ausführungsformen ist gemeinsam, dass über die jeweilige Kupplungseinheit 28, 28a, 28b bzw. 28c sowohl eine wieder lösbare hydraulische Verbindung zum Zuführen der Wasch- und Reinigungsflüssigkeit an die Spritzkanäle 11 und 12 des jeweiligen Wischblattes 5, als auch eine wieder lösbare elektrische Verbindung zum Betrieb des jeweiligen Heizelementes 13 im Wischblatt 5 in einfacher Weise realisierbar ist. Allen zuvor beschriebenen Ausführungsformen ist weiterhin auch gemeinsam, dass die mit der Kupplungseinheit 28, 28a, 28b bzw. 28c zusammen wirkenden wischblattseitigen hydraulische Anschlüsse 24 und 25 sowie der wischblattseitige elektrische Anschluss 26 an dem unmittelbar am Wischblatt 5 montierten Adapterteil 18 vorgesehen sind, und zwar an der Stirnseite 18.1 dieses Adapterteils.

Die Erfindung wurde vorstehend der einfacheren Darstellung wegen jeweils zusammen mit einem einzigen, an einem Wischarm 1 befestigten Wischblatt 5 beschrieben. In der Regel weisen aber Scheibenwischanlagen für Fahrzeuge und dabei insbesondere für Straßenfahrzeuge jeweils wenigstens zwei Wischarme 1 mit jeweils einem Wischblatt 5 auf. Hierbei ist es dann notwendig, beide Wischblätter 5 mit den Spritzkanälen 11 und 12 auszubilden und die Spritzkanäle beider Wischblätter über am jeweiligen Wischarm verlaufende Flüssigkeitsleitungen 14 mit der fahrzeugseitigen Versorgungseinheit für die Wasch- und Reinigungsflüssigkeit zu verbinden. Ist dann auch ein elektrisches Beheizen der Wischblätter 5 erwünscht, so ist es weiterhin notwendig, das jeweils wenigstens eine elektrische Heizelement 13 jedes Wischblattes über die in den Flüssigkeitsleitungen 14 verlaufenden elektrischen Leitungen 15 oder aber über die gesonderten äußeren Leitungen 38 mit der fahrzeugseitigen elektrischen Steuereinrichtung, beispielsweise mit der Steuereinrichtung 43 zu verbinden, und zwar z.B. wiederum über die mit dem jeweiligen Adapterteil 18 des jeweiligen Wischblattes 5 zusammenwirkende Kupplungseinheit 28, 28a, 28b bzw. 28c.

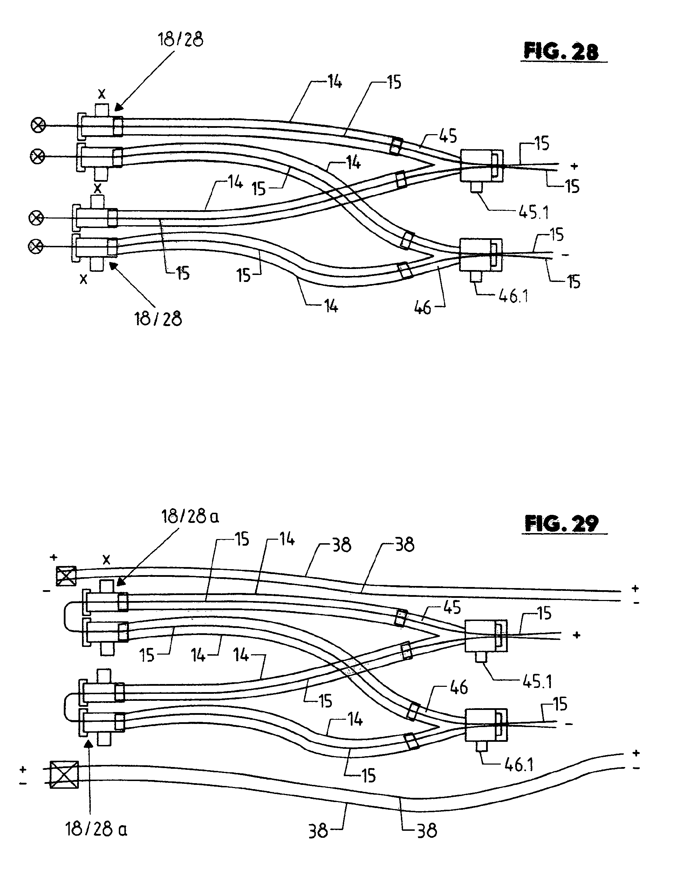

Die Figur 28 zeigt schematisch die Flüssigkeitsleitungen 14 für zwei Wischblätter 5 mit den in diesen Flüssigkeitsleitungen 14 angeordneten und wiederum vorzugsweise als Heiz- oder Widerstandsdraht ausgebildeten elektrischen Leitungen 15. Das eine Ende jedes Paars von Flüssigkeitsleitungen 14 ist bei dieser Ausführungsform z.B. jeweils mit einer Kupplungseinheit 28 verbunden, und zwar zum Anschluss an das am jeweiligen Wischblatt 5 vorgesehene Adapterteil 18, so dass nach dem Herstellung der hydraulischen und elektrischen Verbindung mit dem jeweiligen Wischblatt 5 eine Flüssigkeitsleitung 14 jedes Paares mit dem Spritzkanal 11 und die andere Flüssigkeitsleitung 14 jedes Flüssigkeitsleitungspaares mit dem Spritzkanal 12 in Verbindung steht. Fahrzeugseitig sind die einander entsprechenden, d.h. mit dem Spritzkanal 11 bzw. mit dem Spritzkanal 12 verbundenen Flüssigkeitsleitungen 14 jeweils an ein gemeinsames Kupplungsstück 45 bzw. 46 angeschlossen, welches seinerseits über einen Anschlussstutzen 45.1 bzw. 46.1 jeweils mit einem Ausgang der fahrzeugseitigen Versorgungseinheit 44 (Pumpe) für die Wasch- und Reinigungsflüssigkeit verbunden ist. Die einander entsprechenden und vorzugsweise wiederum als Heizelemente oder Heizdrähte ausgebildeten elektrischen Leitungen 15 sind aus dem jeweiligen Kupplungsstück 45 bzw. 46 herausgeführt und mit den Anschlüssen der fahrzeugseitigen elektrischen Steuereinrichtung 43 verbunden.

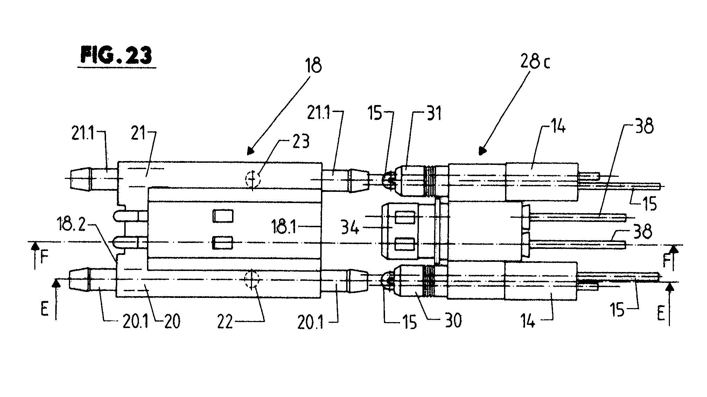

Die Ausführungsform der Figur 23 entspricht also ebenfalls der Ausführungsform der Figuren 5 - 16, bei der das wenigstens eine elektrische Heizelement 13 des Wischblattes 6 in Serie mit den beiden von den Leitungen 15 gebildeten Heizelementen in den Flüssigkeitsleitungen 14 angeordnet ist.

Die Figur 29 zeigt schließlich eine Ausführungsform, die sich von der Ausführungsform der Figur 28 lediglich dadurch unterscheidet, dass die als Heizelemente oder Heizdrähte ausgebildeten und in den Flüssigkeitsleitungen 14 verlaufenden elektrischen Leitungen 15 im Bereich des Wischblattes 5, d.h. z.B. im Bereich der dortigen Kupplungseinheit 28a über einen Leitungsabschnitt oder Leitungssteg miteinander verbunden sind, so dass die als Heizdrähte ausgeführten Leitungen 15 elektrische Heizelemente ausschließlich zum Beheizen der Flüssigkeitsleitungen 14 bilden. Zum Betrieb der Heizelemente 13 in den Wischblättern 5 sind jeweils gesondert elektrische Leitungen 38 vorgesehen. Die in der Figur 29 dargestellte Ausführungsform entspricht also im Wesentlichen der im Zusammenhang mit den Figuren 17 und 18 beschriebenen Ausführungsform.

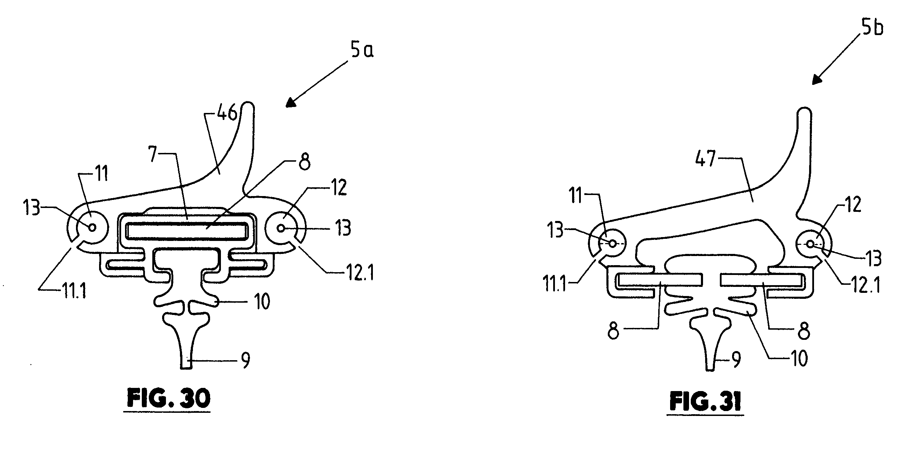

Weitere Beispiele für flache Wischblätter zeigen die Figuren 30 und 31. Bei dem in der Figur 30 im Querschnitt dargestellte flache Wischblatt 5a ist an der Profilschiene 7 ein einen Spoiler bildendes Spoilerprofil 46 befestigt. In diesem Spoilerprofil sind die beiden Spritzkanäle 11 und 12 mit den zugehörigen Düsenöffnungen 11.1 und 12.1 ausgebildet. In jedem Spritzkanal 11 und 12 verlaufend ist wiederum wenigstens eine Länge des das wischblattseitige Heizelement 13 bildenden Heiz- oder Widerstandsdrahtes vorgesehen.

Das in der Figur 31 im Querschnitt dargestellte flache Wischblatt 5b weist die Profilschiene 7 nicht auf. Bei diesem Wischblatt 3b sind zwei sich jeweils über die gesamte Länge des Wischblattes erstreckende Federschienen 8 vorgesehen, zwischen denen der Wischgummi 10 dadurch gehalten ist, dass die Federschienen 8 jeweils mit einem Teil ihrer Breite in Ausnehmungen des Wischgummis 10 eingreifen. Die Federschienen 8 sind an ihrem aus dem Wischgummi vorstehenden Bereichen von einem bei dieser Ausführungsform aus Spoilerprofil 47 ausgebildeten Wischblattelement übergriffen. Im Spoilerprofil 47 sind die Spritzkanäle 11 und 12 mit den Düsen- und Spritzöffnungen 11.1 und 12.1 ausgebildet. Das wischblattseitige Heizelement 13 ist wiederum von Längen eines Heiz- und Widerstandsdrahtes gebildet, der in den Spritzkanälen 11 und 12 verläuft.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrundeliegende Erfindungsgedanke verlassen wird. So sind bei den vorstehend beschriebenen Ausführungsformen die hydraulischen Anschlüsse 30 und 31 sowie der elektrische Anschluss 34 an der jeweiligen Kupplungseinheit 28, 28a, 28b bzw. 28c als über die Stirnseite 29.1 dieser Kupplungseinheit zapfenartig wegstehende Elemente ausgeführt, während die wischblattseitigen hydraulischen Anschlüsse 24 und 25 und der dortige elektrische Anschluss 26 von jeweils einer Öffnung gebildet sind. Selbstverständlich ist es auch möglich, die wischblattseitigen Anschlüsse 24 und 25 bzw. 26 am Adapterteil 18 zumindest teilweise als zapfenartige, über die Stirnseite 18.1 wegstehende Anschlüsse und den jeweils entsprechenden Anschluss an der Kupplungseinheit 28, 28a, 28b bzw. 28c als Öffnung auszuführen. Die in den Figuren dargestellte Ausführung hat allerdings den Vorteil einer besonders kompakten Ausbildung der Kombination Adapterteil 18 und Kupplungseinheit 28, 28a, 28b bzw. 28c, da das Adapterteil 18 für eine wirksame Befestigung am Wischblatt 5 eine gewisse Länge in Wischblattlängsrichtung bzw. in Adapterteillängsrichtung L aufweisen muss und es hierdurch problemlos möglich ist, die die Anschlüsse 24, 25 sowie 26 bildenden und sich mit ihrer Achse parallel zur Adapterteillängsachse L erstreckenden Öffnungen im Adapterteil 18 vorzusehen.

Vorstehend wurde davon ausgegangen, dass das Heizelement 13 von einem in den Spritzkanälen 11 und 12 verlaufenden Heiz- oder Widerstandsdraht gebildet ist. Grundsätzlich kann dieses Heizelement auch als Heizfolie ausgebildet sein, die dann z.B. auf der wenigstens einen Federschiene 8 oder anderweitig am oder im Wischblatt 5, 5a, 5b angeordnet bzw. vorgesehen ist.

## Patentansprüche

1. Wischarm/Wischblatt-Verbindung zwischen einem Wischblatt (5, 5a, 5b) und einem Wischarm (1) einer Scheibenwischanlage für Fahrzeuge, mit einem am Wischblatt (5, 5a, 5b) vorgesehenen Wischblattadapter (6) zur lösbaren Befestigung des Wischblattes (5, 5a, 5b) am Wischarm (1), wobei das Wischblatt (5, 5a, 5b) als flaches Wischblatt (5, 5a, 5b) ausgebildet ist und an wenigstens einer Wischblattlängsseite zumindest eine Düsenöffnung (11.1, 12.1) oder zumindest einen Spritz- oder Verteilerkanal (11, 12) mit Düsenöffnungen (11.1, 12.1) zum Ausbringen einer Reinigungs- oder Waschflüssigkeit auf eine Fahrzeugscheibe aufweist, sowie mit wenigstens einem adapterseitigen Flüssigkeitsanschluss (24, 25) am Wischblattadapter (6) zum lösbaren Verbinden der wenigstens einen Düsenöffnung (11.1, 12.1) oder des wenigstens einen Spritz- oder Verteilerkanals (11, 12) mit wenigstens einer äußeren Flüssigkeitsleitung (14) zum Zuführen der Wasch- oder Reinigungsflüssigkeit, und zwar über eine an die wenigstens eine Flüssigkeitsleitung (14) angeschlossene Kupplungseinheit (28, 28a - 28c), **dadurch gekennzeichnet, dass** das Wischblatt (5, 5a, 5b) als elektrisch beheizbares Wischblatt ausgebildet ist und der Wischblattadapter (6) zusätzlich zu dem wenigstens einen Flüssigkeitsanschluss (24, 25) auch wenigstens einen elektrischen Anschluss (26) aufweist, der über die Kupplungseinheit (28, 28a - 28c) mit wenigstens einer äußeren elektrischen Leitung (15, 38) zum Zuführen eines Heizstromes an das Wischblatt (5, 5a, 5b) lösbar verbunden ist.

2. Verbindung nach Anspruch 1, **dadurch gekennzeichnet, dass** der Wischblattadapter (6) zumindest zweiteilig mit einem am Wischarm (1) befestigten wischarmseitigen Adapterteil und mit einem am Wischblatt (5, 5a, 5b) befestigten wischblattseitigen Adapterteil (18) ausgebildet ist, und dass der wenigstens eine adapterseitige Flüssigkeitsanschluss (24, 25) und der wenigstens eine elektrische Anschluss (26) am wischblattseitigen Adapterteil (18) vorgesehen sind.

3. Verbindung nach Anspruch 1 oder 2, **dadurch gekennzeichnet,**
**dass** die Flüssigkeitsanschlüsse (24, 25; 30, 31) und die elektrischen Anschlüsse (26; 34) als stecker- und buchsenartige Anschlüsse ausgeführt sind, und/oder
**dass** am Wischblattadapter (6) und an der Kupplungseinheit (28, 28a - 28c) jeweils wenigstens zwei einander zugeordnete Flüssigkeitsanschlüsse (24, 25; 30, 31) und/oder jeweils zumindest ein wenigstens einpoliger elektrischer Anschluss (26, 34) vorgesehen sind.

4. Verbindung nach einem der vorhergehenden Ansprüche, **dadurch gekennzeichnet, dass** der wenigstens eine adapterseitige Flüssigkeitsanschluss (24, 25) und der wenigstens eine adapterseitige elektrische Anschluss (26) sowie die mit dem Wischblattadapter (6) verbundene Kupplungseinheit (28, 28a - 28c) an einer einem Wischblattende (5.1) zugewandten Stirnseite (18.1) des Wischblattadapters (6) oder des wischblattseitigen Adapterteils (18) vorgesehen sind.

5. Verbindung nach einem der vorhergehenden Ansprüche, **dadurch gekennzeichnet, dass** bei wenigstens zwei äußeren Flüssigkeitsleitungen (14) die Kupplungseinheit (28, 28a - 28c) für jede Flüssigkeitsleitung (14) einen Flüssigkeitsanschluss (30, 31) aufweist, und dass jedem Flüssigkeitsanschluss (30, 31) an der Kupplungseinheit (28, 28a - 28c) ein eigenständiger, mit einem Spritz- oder Verteilerkanal (11, 12) in Verbindung stehender Flüssigkeitsanschluss (24, 25) am Wischblattadapter (6) zugeordnet ist.

6. Verbindung nach einem der vorhergehenden Ansprüche, **dadurch gekennzeichnet, dass** die wenigstens eine elektrische Leitung (15) zum Zuführen des Heizstromes an das Wischblatt (5, 5a, 5b) oder an ein dortiges elektrisches Heizelement (13) innerhalb der wenigstens einen Flüssigkeitsleitung (14) verläuft und dort vorzugsweise zumindest über eine Teillänge als Heizelement, beispielsweise als Heiz- oder Widerstandsdraht ausgebildet ist.

7. Verbindung nach Anspruch 7, **dadurch gekennzeichnet, dass** bei wenigstens zwei Flüssigkeitsleitungen (14) wenigstens zwei äußere elektrische Leitungen (15) jeweils innerhalb einer Flüssigkeitsleitung (14) vorgesehen sind, und dass bevorzugt wenigstens eine elektrische Leitung (15) zumindest auf einer Teillänge als Heizelement, beispielsweise als Heiz- oder Widerstandsdraht zum Beheizen der Flüssigkeitsleitungen (14) ausgebildet ist.

8. Verbindung nach einem der vorhergehenden Ansprüche, **gekennzeichnet durch** wenigstens eine außerhalb der wenigstens einen Flüssigkeitsleitungen (14) verlaufende elektrische Leitung (38) zum Zuführen des Heizstromes an das beheizbare Wischblatt (5, 5a, 5b).

9. Verbindung nach einem der vorhergehenden Ansprüche, **dadurch gekennzeichnet, dass** in der wenigstens einen Flüssigkeitsleitung (14) ein von wenigstens einer Länge eines Heizdrahtes (15) gebildetes elektrisches Heizelement vorgesehen ist.

10. Verbindung nach einem der vorhergehenden Ansprüche, **dadurch gekennzeichnet, dass** sich der Heizdraht (15) oder das von diesem gebildeten Heizelement über die gesamte Länge der jeweiligen Flüssigkeitsleitung (14) zwischen der Kupplungseinheit (28, 28a - 28c) und einem fahrzeugseitigen Kupplungsstück (41, 42; 45, 46) erstreckt, an welchem der Heizdraht (15) oder das Heizelement oder aber ein elektrischer Anschluss für dieses Heizelement aus der Flüssigkeitsleitung (14) herausgeführt sind.

11. Verbindung nach einem der vorhergehenden Ansprüche, **dadurch gekennzeichnet, dass** der wenigstens eine Heizdraht (15) in wenigstens einer Flüssigkeitsleitung (14) zumindest eine Heizschleife bildet, und zwar mit einem an das Wischblatt (5, 5a, 5b) oder an die Kupplungseinheit (28, 28a - 28c) hin führenden Heizdrahtabschnitt und mit wenigstens einem von dem Wischblatt (5, 5a, 5b) oder der Kupplungseinheit (28, 28a - 28c) weg führenden Heizdrahtabschnitt.

12. Verbindung nach Anspruch 11, **dadurch gekennzeichnet, dass** der wenigstens eine hin führende und der wenigstens eine weg führende Heizdrahtabschnitt in zwei unterschiedlichen Flüssigkeitsleitungen (14) vorgesehen sind und im Bereich des Wischblattes (5, 5a, 5b) oder an der Kupplungseinheit (28, 28a - 28c) elektrisch miteinander verbunden sind, und/oder dass der wenigstens eine hin führende und der wenigstens eine weg führende Heizdrahtabschnitt in ein und derselben Flüssigkeitsleitung (14) verlaufen.

13. Verbindung nach einem der vorhergehenden Ansprüche, **dadurch gekennzeichnet, dass** bei wenigstens zwei Wischarmen (1) mit jeweils wenigstens einem Wischblatt (5, 5a, 5b), welches mit mindestens zwei Spritz- oder Verteilerkanälen (11, 12) versehen und als beheizbares Wischblatt ausgeführt ist, jedes Wischblatt (5, 5a, 5b) oder dessen Wischblattadapter (6) mit zwei getrennten Flüssigkeitsleitungen (14) verbunden ist, und dass in jeder Flüssigkeitsleitung (14) die den Heizdraht oder das Heizelement bildende elektrische Leitung (15) vorgesehen ist.

14. Verbindung nach einem der vorhergehenden Ansprüche, **dadurch gekennzeichnet, dass** die an die Wischblätter (5, 5a, 5b) führenden Flüssigkeitsleitungen (14) wenigsten zwei Gruppen mit mindestens zwei Flüssigkeitsleitungen (14) bilden, und dass die in jeweils einer ersten Flüssigkeitsleitung (14) der Gruppen verlaufenden elektrischen Leitungen (15) an einem gemeinsamen ersten fahrzeugseitigen Kupplungsstück (45) und die in der zweiten Flüssigkeitsleitung (14) verlaufenden elektrischen Leitungen (15) der Gruppen an einem gemeinsamen zweiten fahrzeugseitigen Kupplungsstück (46) aus den Flüssigkeitsleitungen (14) herausgeführt sind.

15. Verbindung nach einem der vorhergehenden Ansprüche, **dadurch gekennzeichnet, dass** die wenigstens eine Flüssigkeitsleitung (14) und/oder die wenigstens eine äußere elektrische Leitung (15, 38) zumindest auf einer Teillänge am Wischarm (1) verlaufend vorgesehenen sind.

16. Wischblatt für Scheibenwischanlagen bei Fahrzeugen, mit einem am Wischblatt (5, 5a, 5b) vorgesehenen Wischblattadapter (6) zur lösbaren Befestigung des Wischblattes (5, 5a, 5b) an einem Wischarm (1), wobei das Wischblatt (5, 5a, 5b) als flaches Wischblatt (5, 5a, 5b) ausgebildet ist und an wenigstens einer Wischblattlängsseite zumindest eine Düsenöffnung oder zumindest einen Spritz- oder Verteilerkanal (11, 12) mit Düsenöffnungen (11.1, 12.1) zum Ausbringen einer Reinigungs- oder Waschflüssigkeit auf eine Fahrzeugscheibe aufweist, sowie mit wenigstens einem adapterseitigen Flüssigkeitsanschluss (24, 25) am Wischblattadapter (6) zum lösbaren Verbinden der wenigstens einen Düsenöffnung (11.1, 12.1) oder des wenigstens einen Spritz- oder Verteilerkanals (11, 12) mit wenigstens einer äußeren Flüssigkeitsleitung (14) zum Zuführen der Wasch- oder Reinigungsflüssigkeit,
**dadurch gekennzeichnet, dass** das Wischblatt (5, 5a, 5b) als elektrisch beheizbares Wischblatt ausgebildet ist und der Wischblattadapter (6) zusätzlich zu dem wenigstens einen Flüssigkeitsanschluss (24, 25) auch wenigstens einen elektrischen Anschluss (26) zum lösbaren Verbinden mit wenigstens einer äußeren elektrischen Leitung (15, 38) zum Zuführen eines Heizstromes an das Wischblatt (5, 5a, 5b) aufweist.

17. Wischblatt nach Anspruch 16, **dadurch gekennzeichnet, dass** der Wischblattadapter (6) zumindest zweiteilig mit einem am Wischarm (1) befestigten wischarmseitigen Adapterteil und mit einem am Wischblatt (5, 5a, 5b) befestigten wischblattseitigen Adapterteil (18) ausgebildet ist, und dass der wenigstens eine adapterseitige Flüssigkeitsanschluss (24, 25) und der wenigstens eine elektrische Anschluss (26) am wischblattseitigen Adapterteil (18) vorgesehen sind.

18. Wischblatt nach Anspruch 16 oder 17, **dadurch gekennzeichnet, dass** der wenigstens eine Flüssigkeitsanschluss (24, 25) und der wenigstens eine elektrische Anschluss (26) als stecker- oder buchsenartiger Anschluss ausgeführt und/oder an einer einem Wischblattende (5.1) zugewandten Stirnseite (18.1) des Wischblattadapters (6) oder des wischblattseitigen Adapterteils (18) vorgesehen sind.

19. Wischblatt nach einem der v Ansprüche 16-18, **dadurch gekennzeichnet, dass** am Wischblattadapter (6) wenigstens zwei Flüssigkeitsanschlüsse (24, 25) und/oder zumindest ein wenigstens einpoliger elektrischer Anschluss (26) vorgesehen sind.

20. Scheibenwischanlage für Fahrzeuge, mit wenigstens einem Wischarm (1) und einem Wischblatt (5, 5a, 5b), welches über eine einen Wischblattadapter (6) aufweisende Wischarm/Wischblatt-Verbindung lösbar mit dem Wischarm (1) verbunden ist, wobei das Wischblatt (5, 5a, 5b) als flaches Wischblatt (5, 5a, 5b) ausgebildet ist und an wenigstens einer Wischblattlängsseite zumindest eine Düsenöffnung oder zumindest einen Spritz- oder Verteilerkanal (11, 12) mit Düsenöffnungen (11.1, 12.1) zum Ausbringen einer Reinigungs- oder Waschflüssigkeit auf eine Fahrzeugscheibe aufweist, sowie mit wenigstens einem adapterseitigen Flüssigkeitsanschluss (24, 25) am Wischblattadapter (6) zum lösbaren Verbinden der wenigstens einen Düsenöffnung (11.1, 12.1) oder des wenigstens einen Spritz- oder Verteilerkanals (11, 12) mit wenigstens einer äußeren Flüssigkeitsleitung (14) zum Zuführen der Wasch- oder Reinigungsflüssigkeit,
**dadurch gekennzeichnet,**
**dass** das Wischblatt (5, 5a, 5b) als elektrisch beheizbares Wischblatt ausgebildet ist und der Wischblattadapter (6) zusätzlich zu dem wenigstens einen Flüssigkeitsanschluss (24, 25) auch wenigstens einen elektrischen Anschluss (26) aufweist, der mit wenigstens einer äußeren elektrischen Leitung (15, 38) zum Zuführen eines Heizstromes an das Wischblatt (5, 5a, 5b) lösbar verbunden ist.

21. Scheibenwischanlage nach Anspruch 20, **dadurch gekennzeichnet, dass** der Wischblattadapter (6) zumindest zweiteilig mit einem am Wischarm (1) befestigten wischarmseitigen Adapterteil und mit einem am Wischblatt (5, 5a, 5b) befestigten wischblattseitigen Adapterteil (18) ausgebildet ist, und dass der wenigstens eine adapterseitige Flüssigkeitsanschluss (24, 25) und der wenigstens eine elektrische Anschluss (26) am wischblattseitigen Adapterteil (18) vorgesehen sind.

22. Scheibenwischanlage nach Anspruch 20 oder 21, **dadurch gekennzeichnet, dass** der wenigstens eine adapterseitige Flüssigkeitsanschluss (24, 25) und der wenigstens eine adapterseitige elektrische Anschluss (26) an einer einem Wischblattende (5.1) zugewandten Stirnseite (18.1) des Wischblattadapters (6) oder des wischblattseitigen Adapterteils (18) vorgesehen sind.

23. Scheibenwischanlage nach einem der Ansprüche 20-22, **dadurch gekennzeichnet, dass** die wenigstens eine elektrische Leitung (15) zum Zuführen des Heizstromes an das Wischblatt (5, 5a, 5b) oder an ein dortiges elektrisches Heizelement (13) innerhalb der wenigstens einen Flüssigkeitsleitung (14) verläuft und dort vorzugsweise zumindest über eine Teillänge als Heizelement, beispielsweise als Heiz- oder Widerstandsdraht ausgebildet ist.

24. Scheibenwischanlage nach Anspruch 23, **dadurch gekennzeichnet, dass** bei wenigstens zwei Flüssigkeitsleitungen (14) wenigstens zwei äußere elektrische Leitungen (15) jeweils innerhalb einer Flüssigkeitsleitung (14) vorgesehen sind, und dass bevorzugt wenigstens eine elektrische Leitung (15) zumindest auf einer Teillänge als Heizelement, beispielsweise als Heiz- oder Widerstandsdraht zum Beheizen der Flüssigkeitsleitungen (14) ausgebildet ist.

25. Scheibenwischanlage nach einem der Ansprüche 20-24, **gekennzeichnet durch** wenigstens eine außerhalb der wenigstens einen Flüssigkeitsleitungen (14) verlaufende elektrische Leitung (38) zum Zuführen des Heizstromes an das beheizbare Wischblatt (5, 5a, 5b).

26. Scheibenwischanlage nach einem der Ansprüche 20-25, **dadurch gekennzeichnet, dass** in der wenigstens einen Flüssigkeitsleitung (14) ein von wenigstens einer Länge eines Heizdrahtes (15) gebildetes elektrisches Heizelement vorgesehen ist.

27. Scheibenwischanlage nach einem der Ansprüche 20-26, **dadurch gekennzeichnet, dass** sich der Heizdraht (15) oder das von diesem gebildeten Heizelement über die gesamte Länge der jeweiligen Flüssigkeitsleitung (14) zwischen der Kupplungseinheit (28, 28a - 28c) und einem fahrzeugseitigen Kupplungsstück (41, 42; 45, 46) erstreckt, an welchem der Heizdraht (15) oder das Heizelement oder aber ein elektrischer Anschluss für dieses Heizelement aus der Flüssigkeitsleitung (14) herausgeführt sind.

28. Scheibenwischanlage nach einem der Ansprüche 20-27, **dadurch gekennzeichnet, dass** der wenigstens eine Heizdraht (15) in wenigstens einer Flüssigkeitsleitung (14) zumindest eine Heizschleife bildet, und zwar mit einem an das Wischblatt (5, 5a, 5b) oder an die Kupplungseinheit (28, 28a - 28c) hin führenden Heizdrahtabschnitt und mit wenigstens einem von dem Wischblatt (5, 5a, 5b) oder der Kupplungseinheit (28, 28a - 28c) weg führenden Heizdrahtabschnitt.

29. Scheibenwischanlage nach Anspruch 28, **dadurch gekennzeichnet, dass** der hin führende und der weg führende Heizdrahtabschnitt in zwei unterschiedlichen Flüssigkeitsleitungen (14) vorgesehen sind und im Bereich des Wischblattes (5, 5a, 5b) oder an der Kupplungseinheit (28, 28a - 28c) elektrisch miteinander verbunden sind,
und/oder
dass die wenigstens zwei Heizdrahtabschnitte der wenigstens einen Heizschlaufe in ein und derselben Flüssigkeitsleitung (14) verlaufen.

30. Scheibenwischanlage nach einem der Ansprüche 20-29, **dadurch gekennzeichnet, dass** bei wenigstens zwei Wischarmen (1) mit jeweils wenigstens einem Wischblatt (5, 5a, 5b), welches mit mindestens zwei Spritz- oder Verteilerkanälen (11, 12) versehen und als beheizbares Wischblatt ausgeführt ist, jedes Wischblatt (5, 5a, 5b) oder dessen Wischblattadapter (6) mit zwei getrennten Flüssigkeitsleitungen (14) verbunden ist, und dass in jeder Flüssigkeitsleitung (14) die den Heizdraht oder das Heizelement bildende elektrische Leitung (15) vorgesehen ist.

31. Scheibenwischanlage nach einem der Ansprüche 20-30, **dadurch gekennzeichnet, dass** die an die Wischblätter (5, 5a, 5b) führenden Flüssigkeitsleitungen (14) wenigsten zwei Gruppen mit mindestens zwei Flüssigkeitsleitungen (14) bilden, und dass die in jeweils einer ersten Flüssigkeitsleitung (14) der Gruppen verlaufenden elektrischen Leitungen (15) an einem gemeinsamen ersten fahrzeugseitigen Kupplungsstück (45) und die in der zweiten Flüssigkeitsleitung (14) verlaufenden elektrischen Leitungen (15) der Gruppen an einem gemeinsamen zweiten fahrzeugseitigen Kupplungsstück (46) aus den Flüssigkeitsleitungen (14) herausgeführt sind.

32. Scheibenwischanlage nach einem der Ansprüche 20-31, **dadurch gekennzeichnet, dass** die wenigstens eine Flüssigkeitsleitung (14) und/oder die wenigstens eine äußere elektrische Leitung (15, 38) zumindest auf einer Teillänge am Wischarm (1) verlaufend vorgesehenen sind.

33. Scheibenwischanlage nach einem der Ansprüche 20-32, **dadurch gekennzeichnet, dass** die Wischarm/Wischblatt-Verbindung nach einem der Ansprüche 1 - 15 ausgebildet ist.

## Claims

1. Wiper arm/wiper blade connection between a wiper blade (5, 5a, 5b) and a wiper arm (1) of a windscreen wiper installation for vehicles, having a wiper blade adapter (6), provided on the wiper blade (5, 5a, 5b), for detachably fastening the wiper blade (5, 5a, 5b) to the wiper arm (1), wherein the wiper blade (5, 5a, 5b) is embodied as a flat wiper blade (5, 5a, 5b) and has, on at least one wiper blade longitudinal side, at least one nozzle opening (11.1, 12.1) or at least one spray duct or distributor duct (11, 12) with nozzle openings (11.1, 12.1) for discharging a cleaning fluid or washing fluid onto a vehicle windscreen, and having at least one adapter-side fluid connection (24, 25) on the wiper blade adapter (6) for detachably connecting the at least one nozzle opening (11.1, 12.1) or the at least one spray duct or distributor duct (11, 12) to at least one outer fluid line (14) for feeding the washing fluid or cleaning fluid, specifically via a coupling unit (28, 28a-28c) which is connected to the at least one fluid line (14), **characterized in that** the wiper blade (5, 5a, 5b) is embodied as an electrically heatable wiper blade, and
the wiper blade adapter (6) also has, in addition to the at least one fluid connection (24, 25), at least one electrical connection (26) which is detachably connected via the coupling unit (28, 28a-28c) to at least one outer electrical line (15, 38) for feeding a heating current to the wiper blade (5, 5a, 5b).

2. Connection according to Claim 1, **characterized in that** the wiper blade adapter (6) is embodied at least in two parts with a wiper-arm-side adapter part which is fastened to the wiper arm (1) and with a wiper-blade-side adapter part (18) which is fastened to the wiper blade (5, 5a, 5b), and **in that** the at least one adapter-side fluid connection (24, 25) and the at least one electrical connection (26) are provided on the wiper-blade-side adapter part (18).

3. Connection according to Claim 1 or 2, **characterized in that** the fluid connections (24, 25; 30, 31) and the electrical connections (26; 34) are embodied as plug-like connections and socket-like connections,
and/or
**in that** at least two fluid connections (24, 25; 30, 31) which are assigned to one another are provided on the wiper-blade adapter (6) and/or at least one electrical connection (26, 34), which is at least unipolar, is provided on the coupling unit (28, 28a-28c).

4. Connection according to one of the preceding claims, **characterized in that** the at least one adapter-side fluid connection (24, 25) and the at least one adapter-side electrical connection (26) as well as the coupling unit (28, 28a-28c) which is connected to the wiper blade adapter (6) are provided on an end side (18.1), facing a wiper blade end (5.1), of the wiper blade adapter (6) or of the wiper-blade-side adapter part (18).

5. Connection according to one of the preceding claims, **characterized in that**, when there are at least two outer fluid lines (14), the coupling unit (28, 28a-28c) has a fluid connection (30, 31) for each fluid line (14), and **in that** each fluid connection (30, 31) on the coupling unit (28, 28a-28c) is assigned an independent fluid connection (24, 25), connected to a spray duct or distributor duct (11, 12), on the wiper blade adapter (6).

6. Connection according to one of the preceding claims, **characterized in that** the at least one electrical line (15) for feeding the heating current to the wiper blade (5, 5a, 5b) or to an electrical heating element (13) there runs inside the at least one fluid line (14) and is preferably embodied there at least over a partial length as a heating element, for example as a heating wire or resistance wire.

7. Connection according to Claim 7, **characterized in that**, when there are at least two fluid lines (14), at least two outer electrical lines (15) are each provided inside a fluid line (14), and **in that** preferably at least one electrical line (15) is embodied at least over a partial length as a heating element, for example as a heating wire or resistance wire for heating the fluid lines (14).

8. Connection according to one of the preceding claims, **characterized by** at least one electrical line (38), running outside the at least one fluid line (14), for feeding the heating current to the heatable wiper blade (5, 5a, 5b).

9. Connection according to one of the preceding claims, **characterized in that** an electrical heating element which is formed by at least one length of a heating wire (15) is provided in the at least one fluid line (14).

10. Connection according to one of the preceding claims, **characterized in that** the heating wire (15) or the heating element which is formed thereby extends over the entire length of the respective fluid line (14) between the coupling unit (28, 28a-28c) and a vehicle-side coupling piece (41, 42; 45, 46) to which the heating wire (15) or the heating element or else an electrical connection for this heating element is led out of the fluid line (14).

11. Connection according to one of the preceding claims, **characterized in that** the at least one heating wire (15) forms, in at least one fluid line (14), at least one heating loop, specifically with a heating wire section which leads to the wiper blade (5, 5a, 5b) or to the coupling unit (28, 28a-28c), and with at least one heating wire section which leads away from the wiper blade (5, 5a, 5b) or the coupling unit (28, 28a-28c).

12. Connection according to Claim 11, **characterized in that** the at least one heating wire section which leads in and the at least one heating wire section which leads away are provided in two different fluid lines (14) and are electrically connected to one another in the region of the wiper blade (5, 5a, 5b) or at the coupling unit (28, 28a-28c), and/or the at least one heating wire section which leads in and the at least one heating wire section which leads away run in the same fluid line (14).

13. Connection according to one of the preceding claims, **characterized in that** when there at least two wiper arms (1), each with at least one wiper blade (5, 5a, 5b) which is provided with at least two spray ducts or distributor ducts (11, 12) and is embodied as a heatable wiper blade, each wiper blade (5, 5a, 5b) or the wiper blade adapter (6) thereof is connected to two separate fluid lines (14), and **in that** the electrical line (15) which forms the heating wire or the heating element is provided in each fluid line (14).

14. Connection according to one of the preceding claims, **characterized in that** the fluid lines (14) which lead to the wiper blades (5, 5a, 5b) form at least two groups with at least two fluid lines (14), and **in that** the electrical lines (15) which run in a first fluid line (14) of the groups are led out of the fluid lines (14) at a first common vehicle-side coupling piece (45), and the electrical lines (15), which run in the second fluid line (14), of the groups are led out of the fluid lines (14) at a second common vehicle-side coupling piece (46).

15. Connection according to one of the preceding claims, **characterized in that** the at least one fluid line (14) and/or the at least one outer electrical line (15, 38) are provided running over at least a partial length on the wiper arm (1).

16. Wiper blade for windscreen wiper installations in vehicles, having a wiper blade adapter (6) provided on the wiper blade (5, 5a, 5b), for detachably fastening the wiper blade (5, 5a, 5b) to a wiper arm (1), wherein the wiper blade (5, 5a, 5b) is embodied as a flat wiper blade (5, 5a, 5b) and has, on at least one wiper blade longitudinal side, at least one nozzle opening or at least one spray duct or distributor duct (11, 12) with nozzle openings (11.1, 12.1) for discharging a cleaning fluid or washing fluid onto a vehicle windscreen, and having at least one adapter-side fluid connection (24, 25) on the wiper blade adapter (6) for detachably connecting the at least one nozzle opening (11.1, 12.1) or the at least one spray duct or distributor duct (11, 12) to at least one outer fluid line (14) for feeding the washing fluid or cleaning fluid, **characterized in that** the wiper blade (5, 5a, 5b) is embodied as an electrically heatable wiper blade, and the wiper blade adapter (6) also has, in addition to the at least one fluid connection (24, 25), at least one electrical connection (26) for detachably connecting to at least one outer electrical line (15, 38) for feeding a heating current to the wiper blade (5, 5a, 5b).

17. Wiper blade according to Claim 16, **characterized in that** the wiper blade adapter (6) is embodied at least in two parts with a wiper-arm-side adapter part which is fastened to the wiper arm (1) and with a wiper-blade-side adapter part (18) which is fastened to the wiper blade (5, 5a, 5b), and **in that** the at least one adapter-side fluid connection (24, 25) and the at least one electrical connection (26) are provided on the wiper-blade-side adapter part (18).

18. Wiper blade according to Claim 16 or 17, **characterized in that** the at least one fluid connection (24, 25) and the at least one electrical connection (26) are embodied as plug-like or socket-like connections and/or are provided on an end side (18.1), facing a wiper blade end (5.1), of the wiper blade adapter (6) or of the wiper-blade-side adapter part (18).

19. Wiper blade according to one of Claims 16-18, **characterized in that** at least two fluid connections (24, 25) and/or at least one at least unipolar electrical connection (26) are provided on the wiper blade adapter (6).

20. Windscreen wiper installation for vehicles, having at least one wiper arm (1) and one wiper blade (5, 5a, 5b) which is detachably connected to the wiper arm (1) via a wiper arm/wiper blade connection which has a wiper blade adapter (6), wherein the wiper blade (5, 5a, 5b) is embodied as a flat wiper blade (5, 5a, 5b) and has, on at least one wiper blade longitudinal side, at least one nozzle opening or at least one spray duct or distributor duct (11, 12) with nozzle openings (11.1, 12.1) for discharging a cleaning fluid or washing fluid onto a vehicle windscreen, and having at least one adapter-side fluid connection (24, 25) on the wiper blade adapter (6) for detachably connecting the at least one nozzle opening (11.1, 12.1) or the at least one spray duct or distributor duct (11, 12) to at least one outer fluid line (14) for feeding the washing fluid or cleaning fluid, **characterized in that** the wiper blade (5, 5a, 5b) is embodied as an electrically heatable wiper blade, and the wiper blade adapter (6) also has, in addition to the at least one fluid connection (24, 25), at least one electrical connection (26) which is detachably connected to at least one outer electrical line (15, 38) for feeding a heating current to the wiper blade (5, 5a, 5b).

21. Windscreen wiper installation according to Claim 20, **characterized in that** the wiper blade adapter (6) is embodied at least in two parts with a wiper-arm-side adapter part which is fastened to the wiper arm (1) and with a wiper-blade-side adapter part (18) which is fastened to the wiper blade (5, 5a, 5b), and **in that** the at least one adapter-side fluid connection (24, 25) and the at least one electrical connection (26) are provided on the wiper-blade-side adapter part (18).

22. Windscreen wiper installation according to Claim 20 or 21, **characterized in that** the at least one adapter-side fluid connection (24, 25) and the at least one adapter-side electrical connection (26) are provided on an end side (18.1), facing a wiper blade end (5.1), of the wiper blade adapter (6) or of the wiper-blade-side adapter part (18).

23. Windscreen wiper installation according to one of Claims 20-22, **characterized in that** the at least one electrical line (15) for feeding the heating current to the wiper blade (5, 5a, 5b) or to an electrical heating element (13) there runs inside the at least one fluid line (14) and is preferably embodied there at least over a partial length as a heating element, for example as a heating wire or resistance wire.

24. Windscreen wiper installation according to Claim 23, **characterized in that**, when there are at least two fluid lines (14), at least two outer electrical lines (15) are each provided inside a fluid line (14), and **in that** preferably at least one electrical line (15) is embodied at least over a partial length as a heating element, for example as a heating wire or resistance wire for heating the fluid lines (14).

25. Windscreen wiper installation according to one of Claims 20-24, **characterized by** at least one electrical line (38), running outside the at least one fluid line (14), for feeding the heating current to the heatable wiper blade (5, 5a, 5b).

26. Windscreen wiper installation according to one of Claims 20-25, **characterized in that** an electrical heating element which is formed by at least one length of a heating wire (15) is provided in the at least one fluid line (14).

27. Windscreen wiper installation according to one of Claims 20-26, **characterized in that** the heating wire (15) or the heating element which is formed thereby extends over the entire length of the respective fluid line (14) between the coupling unit (28, 28a-28c) and a vehicle-side coupling piece (41, 42; 45, 46) to which the heating wire (15) or the heating element or else an electrical connection for this heating element is led out of the fluid line (14).

28. Windscreen wiper installation according to one of Claims 20-27, **characterized in that** the at least one heating wire (15) forms, in at least one fluid line (14), at least one heating loop, specifically with a heating wire section which leads to the wiper blade (5, 5a, 5b) or to the coupling unit (28, 28a-28c), and with at least one heating wire section which leads away from the wiper blade (5, 5a, 5b) or the coupling unit (28, 28a-28c).

29. Windscreen wiper installation according to Claim 28, **characterized in that** the heating wire section which leads in and the heating wire section which leads away are provided in two different fluid lines (14) and are electrically connected to one another in the region of the wiper blade (5, 5a, 5b) or at the coupling unit (28, 28a-28c), and/or the at least two heating wire sections of the at least one heating loop run in the same fluid line (14).

30. Windscreen wiper installation according to one of Claims 20-29, **characterized in that** when there at least two wiper arms (1), each with at least one wiper blade (5, 5a, 5b) which is provided with at least two spray ducts or distributor ducts (11, 12) and is embodied as a heatable wiper blade, each wiper blade (5, 5a, 5b) or the wiper blade adapter (6) thereof is connected to two separate fluid lines (14), and **in that** the electrical line (15) which forms the heating wire or the heating element is provided in each fluid line (14).

31. Windscreen wiper installation according to one of Claims 20-30, **characterized in that** the fluid lines (14) which lead to the wiper blades (5, 5a, 5b) form at least two groups with at least two fluid lines (14), and **in that** the electrical lines (15) which run in a first fluid line (14) of the groups are led out of the fluid lines (14) at a first common vehicle-side coupling piece (45), and the electrical lines (15), which run in the second fluid line (14), of the groups are led out of the fluid lines (14) at a second common vehicle-side coupling piece (46).

32. Windscreen wiper installation according to one of Claims 20-31, **characterized in that** the at least one fluid line (14) and/or the at least one outer electrical line (15, 38) are provided running over at least a partial length on the wiper arm (1).

33. Windscreen wiper installation according to one of Claims 20-32, **characterized in that** the wiper arm/wiper blade connection is embodied according to one of Claims 1-15.

## Revendications

1. Accouplement raclette/bras d'essuie-glace entre une raclette d'essuie-glace (5, 5a, 5b) et un bras d'essuie-glace (1) d'un système d'essuie-glace pour des véhicules, avec un adaptateur de raclette d'essuie-glace (6) prévu sur la raclette d'essuie-glace (5, 5a, 5b) pour la fixation amovible de la raclette d'essuie-glace (5, 5a, 5b) au bras d'essuie-glace (1), dans lequel la raclette d'essuie-glace (5, 5a, 5b) est réalisée sous forme de raclette d'essuie-glace plate (5, 5a, 5b) et présente sur au moins un côté longitudinal de raclette d'essuie-glace au moins une ouverture de buse (11.1, 12.1) ou au moins un canal d'injecteur ou de distributeur (11, 12) avec des ouvertures de buses (11.1, 12.1) pour l'expulsion d'un liquide de nettoyage ou de lavage sur une vitre de véhicule, ainsi qu'avec un raccord de liquide côté adaptateur (24, 25) sur l'adaptateur de raclette d'essuie-glace (6) pour le raccordement amovible de ladite au moins une ouverture de buse (11.1, 12.1) ou dudit au moins un canal d'injecteur ou de distributeur (11, 12) à au moins une conduite de liquide extérieure (14) pour la fourniture du liquide de lavage ou de nettoyage, notamment au moyen d'une unité de couplage (28, 28a-28c) raccordée à ladite au moins une conduite de liquide (14), **caractérisé en ce que** la raclette d'essuie-glace (5, 5a, 5b) est réalisée sous forme de raclette d'essuie-glace à chauffage électrique et l'adaptateur de raclette d'essuie-glace (6) présente également, en plus dudit au moins un raccord de liquide (24, 25), au moins un raccord électrique (26), qui est relié de façon amovible au moyen de l'unité de couplage (28, 28a-28c) à au moins une ligne électrique extérieure (15, 38) pour la fourniture d'un courant de chauffage à la raclette d'essuie-glace (5, 5a, 5b).

2. Accouplement selon la revendication 1, **caractérisé en ce que** l'adaptateur de raclette d'essuie-glace (6) est réalisé en au moins deux parties avec une partie d'adaptateur côté bras d'essuie-glace fixée sur le bras d'essuie-glace (1) et une partie d'adaptateur (18) côté raclette d'essuie-glace fixée à la raclette d'essuie-glace (5, 5a, 5b), et **en ce que** ledit au moins un raccord de liquide côté adaptateur (24, 25) et ledit au moins un raccord électrique (26) sont prévus sur la partie d'adaptateur côté raclette d'essuie-glace (18).

3. Accouplement selon la revendication 1 ou 2, **caractérisé en ce que** les raccords de liquide (24, 25; 30, 31) et les raccords électriques (26; 34) sont réalisés sous forme de raccords à fiche et à douille, et/ou **en ce qu'**il est prévu sur l'adaptateur de raclette d'essuie-glace (6) et sur l'unité de couplage (28, 28a-28c) respectivement au moins deux raccords de liquide (24, 25; 30, 31) associés l'un à l'autre et/ou respectivement au moins un raccord électrique (26; 34) au moins unipolaire.

4. Accouplement selon l'une quelconque des revendications précédentes, **caractérisé en ce que** ledit au moins un raccord de liquide côté adaptateur (24, 25) et ledit au moins un raccord électrique côté adaptateur (26) ainsi que l'unité de couplage (28, 28a-28c) reliée à l'adaptateur de raclette d'essuie-glace (6) sont prévus sur un côté frontal (18.1) de l'adaptateur de raclette d'essuie-glace (6) ou de la partie d'adaptateur côté raclette d'essuie-glace (18) tourné vers une extrémité de raclette d'essuie-glace (5.1).

5. Accouplement selon l'une quelconque des revendications précédentes, **caractérisé en ce que**, dans le cas d'au moins deux conduites de liquide extérieures (14), l'unité de couplage (28, 28a-28c) présente un raccord de liquide (30, 31) pour chaque conduite de liquide (14), et **en ce qu'**un raccord de liquide particulier (24, 25) sur l'adaptateur de raclette d'essuie-glace (6) relié à un canal d'injecteur ou de distributeur (11, 12) est associé à chaque raccord de liquide (30, 31) à l'unité de couplage (28, 28a-28c).

6. Accouplement selon l'une quelconque des revendications précédentes, **caractérisé en ce que** ladite au moins une ligne électrique (15) pour la fourniture du courant de chauffage à la raclette d'essuie-glace (5, 5a, 5b) ou à un élément chauffant qui s'y trouve (13) s'étend à l'intérieur de ladite au moins une conduite de liquide (14) et y est formée de préférence au moins sur une longueur partielle comme élément chauffant, par exemple comme fil de chauffage ou de résistance.

7. Accouplement selon la revendication 7, **caractérisé en ce que**, dans le cas d'au moins deux conduites de liquide (14), il est prévu au moins deux lignes électriques extérieures (15) respectivement à l'intérieur d'une conduite de liquide (14), et **en ce qu'**au moins une ligne électrique (15) est formée au moins sur une longueur partielle comme élément chauffant, par exemple comme fil de chauffage ou de résistance pour le chauffage des conduites de liquide (14).

8. Accouplement selon l'une quelconque des revendications précédentes, **caractérisé par** au moins une ligne électrique (38) s'étendant à l'extérieur de ladite au moins une conduite de liquide (14) pour la fourniture du courant de chauffage à la raclette d'essuie-glace chauffante (5, 5a, 5b).

9. Accouplement selon l'une quelconque des revendications précédentes, **caractérisé en ce qu'**il est prévu dans ladite au moins une conduite de liquide (14) un élément chauffant électrique formé par au moins une longueur d'un fil chauffant (15).

10. Accouplement selon l'une quelconque des revendications précédentes, **caractérisé en ce que** le fil chauffant (15) ou l'élément chauffant formé par celui-ci s'étend sur toute la longueur de la conduite de liquide respective (14) entre l'unité de couplage (28, 28a-28c) et une pièce de couplage côté véhicule (41, 42; 45, 46), à laquelle le fil chauffant (15) ou l'élément chauffant ou aussi un raccord électrique pour cet élément chauffant est conduit hors de la conduite de liquide (14).

11. Accouplement selon l'une quelconque des revendications précédentes, **caractérisé en ce que** ledit au moins un fil chauffant (15) forme dans au moins une conduite de liquide (14) au moins une boucle de chauffage, notamment avec une portion de fil chauffant conduisant à la raclette d'essuie-glace (5, 5a, 5b) ou à l'unité de couplage (28, 28a-28c) et avec au moins une portion de fil chauffant s'éloignant de la raclette d'essuie-glace (5, 5a, 5b) ou de l'unité de couplage (28, 28a-28c).

12. Accouplement selon la revendication 11, **caractérisé en ce que** ladite au moins une portion de fil chauffant qui s'approche et ladite au moins une portion de fil chauffant qui s'éloigne sont prévues dans deux conduites de liquide différentes (14) et sont électriquement reliées l'une à l'autre dans la région de la raclette d'essuie-glace (5, 5a, 5b) ou à l'unité de couplage (28, 28a-28c), et/ou **en ce que** ladite au moins une portion de fil chauffant qui s'approche et ladite au moins une portion de fil chauffant qui s'éloigne s'étendent dans une seule et même conduite de liquide (14).

13. Accouplement selon l'une quelconque des revendications précédentes, **caractérisé en ce que**, dans le cas d'au moins deux bras d'essuie-glace (1) avec chacun au moins une raclette d'essuie-glace (5, 5a, 5b), qui est munie d'au moins deux canaux d'injecteur ou de distributeur (11, 12) et qui est réalisée sous forme de raclette d'essuie-glace chauffante, chaque raclette d'essuie-glace (5, 5a, 5b) ou son adaptateur de raclette d'essuie-glace (6) est raccordée à deux conduites de liquide distinctes (14), et **en ce que** la ligne électrique (15) formant le fil chauffant ou l'élément chauffant est prévue dans chaque conduite de liquide (14).

14. Accouplement selon l'une quelconque des revendications précédentes, **caractérisé en ce que** les conduites de liquide (14) menant aux raclettes d'essuie-glace (5, 5a, 5b) forment au moins deux groupes avec au moins deux conduites de liquide (14), et **en ce que** les lignes électriques (15) s'étendant respectivement dans une première conduite de liquide (14) des groupes sont menées hors des conduites de liquide (14) à une première pièce de couplage commune côté véhicule (45) et les lignes électriques (15) s'étendant respectivement dans la deuxième conduite de liquide (14) des groupes sont menées hors des conduites de liquide (14) à une deuxième pièce de couplage commune côté véhicule (46).

15. Accouplement selon l'une quelconque des revendications précédentes, **caractérisé en ce que** ladite au moins une conduite de liquide (14) et/ou ladite au moins une ligne électrique extérieure (15, 38) sont prévues pour s'étendre ensemble sur une longueur partielle sur le bras d'essuie-glace (1).

16. Raclette d'essuie-glace pour des systèmes d'essuie-glace pour des véhicules, avec un adaptateur de raclette d'essuie-glace (6) prévu sur la raclette d'essuie-glace (5, 5a, 5b) pour la fixation amovible de la raclette d'essuie-glace (5, 5a, 5b) à un bras d'essuie-glace (1), dans laquelle la raclette d'essuie-glace (5, 5a, 5b) est réalisée sous forme de raclette d'essuie-glace plate (5, 5a, 5b) et présente sur au moins un côté longitudinal de raclette d'essuie-glace au moins une ouverture de buse ou au moins un canal d'injecteur ou de distributeur (11, 12) avec des ouvertures de buses (11.1, 12.1) pour l'expulsion d'un liquide de nettoyage ou de lavage sur une vitre de véhicule, ainsi qu'avec un raccord de liquide côté adaptateur (24, 25) sur l'adaptateur de raclette d'essuie-glace (6) pour le raccordement amovible de ladite au moins une ouverture de buse (11.1, 12.1) ou dudit au moins un canal d'injecteur ou de distributeur (11, 12) à au moins une conduite de liquide extérieure (14) pour la fourniture du liquide de lavage ou de nettoyage, **caractérisée en ce que** la raclette d'essuie-glace (5, 5a, 5b) est réalisée sous forme de raclette d'essuie-glace à chauffage électrique et l'adaptateur de raclette d'essuie-glace (6) présente également, en plus dudit au moins un raccord de liquide (24, 25), au moins un raccord électrique (26), pour la liaison amovible à au moins une ligne électrique extérieure (15, 38) pour la fourniture d'un courant de chauffage à la raclette d'essuie-glace (5, 5a, 5b).

17. Raclette d'essuie-glace selon la revendication 16, **caractérisée en ce que** l'adaptateur de raclette d'essuie-glace (6) est réalisé en au moins deux parties avec une partie d'adaptateur côté bras d'essuie-glace fixée sur le bras d'essuie-glace (1) et une partie d'adaptateur (18) côté raclette d'essuie-glace fixée à la raclette d'essuie-glace (5, 5a, 5b), et **en ce que** ledit au moins un raccord de liquide côté adaptateur (24, 25) et ledit au moins un raccord électrique (26) sont prévus sur la partie d'adaptateur côté raclette d'essuie-glace (18).

18. Raclette d'essuie-glace selon la revendication 16 ou 17, **caractérisée en ce que** ledit au moins un raccord de liquide (24, 25) et ledit au moins un raccord électrique (26) sont réalisés sous forme de raccords à fiche et à douille, et/ou ils sont prévus sur un côté frontal (18.1), tourné vers une extrémité de raclette d'essuie-glace (5.1), de l'adaptateur de raclette d'essuie-glace (6) ou de la partie d'adaptateur (18) côté raclette d'essuie-glace.

19. Raclette d'essuie-glace selon l'une quelconque des revendications précédentes 16 à 18, **caractérisée en ce qu'**il est prévu sur l'adaptateur de raclette d'essuie-glace (6) au moins deux raccords de liquide (24, 25) et/ou au moins un raccord électrique (26) au moins unipolaire.

20. Système d'essuie-glace pour des véhicules, avec au moins un bras d'essuie-glace (1) et une raclette d'essuie-glace (5, 5a, 5b), qui est assemblée de façon amovible au bras d'essuie-glace (1) au moyen d'un accouplement raclette/bras d'essuie-glace présentant un adaptateur de raclette d'essuie-glace (6), dans lequel la raclette d'essuie-glace (5, 5a, 5b) est réalisée sous forme de raclette d'essuie-glace plate (5, 5a, 5b) et présente sur au moins un côté longitudinal de raclette d'essuie-glace au moins une ouverture de buse ou au moins un canal d'injecteur ou de distributeur (11, 12) avec des ouvertures de buses (11.1, 12.1) pour l'expulsion d'un liquide de nettoyage ou de lavage sur une vitre de véhicule, ainsi qu'avec un raccord de liquide côté adaptateur (24, 25) sur l'adaptateur de raclette d'essuie-glace (6) pour le raccordement amovible de ladite au moins une ouverture de buse (11.1, 12.1) ou dudit au moins un canal d'injecteur ou de distributeur (11, 12) à au moins une conduite de liquide extérieure (14) pour la fourniture du liquide de lavage ou de nettoyage, **caractérisé en ce que** la raclette d'essuie-glace (5, 5a, 5b) est réalisée sous forme de raclette d'essuie-glace à chauffage électrique et l'adaptateur de raclette d'essuie-glace (6) présente également, en plus dudit au moins un raccord de liquide (24, 25), au moins un raccord électrique (26), qui est relié de façon amovible à au moins une ligne électrique extérieure (15, 38) pour la fourniture d'un courant de chauffage à la raclette d'essuie-glace (5, 5a, 5b).

21. Système d'essuie-glace selon la revendication 20, **caractérisé en ce que** l'adaptateur de raclette d'essuie-glace (6) est réalisé en au moins deux parties avec une partie d'adaptateur côté bras d'essuie-glace fixée sur le bras d'essuie-glace (1) et une partie d'adaptateur (18) côté raclette d'essuie-glace fixée à la raclette d'essuie-glace (5, 5a, 5b), et **en ce que** ledit au moins un raccord de liquide côté adaptateur (24, 25) et ledit au moins un raccord électrique (26) sont prévus sur la partie d'adaptateur côté raclette d'essuie-glace (18).

22. Système d'essuie-glace selon la revendication 20 ou 21, **caractérisé en ce que** ledit au moins un raccord de liquide côté adaptateur (24, 25) et ledit au moins un raccord électrique côté adaptateur (26) sont prévus sur un côté frontal (18.1) de l'adaptateur de raclette d'essuie-glace (6) ou de la partie d'adaptateur côté raclette d'essuie-glace (18) tourné vers une extrémité de raclette d'essuie-glace (5.1).

23. Système d'essuie-glace selon l'une quelconque des revendications 20 à 22, **caractérisé en ce que** ladite au moins une ligne électrique (15) pour la fourniture du courant de chauffage à la raclette d'essuie-glace (5, 5a, 5b) ou à un élément chauffant qui s'y trouve (13) s'étend à l'intérieur de ladite au moins une conduite de liquide (14) et y est formée de préférence au moins sur une longueur partielle comme élément chauffant, par exemple comme fil de chauffage ou de résistance.

24. Système d'essuie-glace selon la revendication 23, **caractérisé en ce que**, dans le cas d'au moins deux conduites de liquide (14), il est prévu au moins deux lignes électriques extérieures (15) respectivement à l'intérieur d'une conduite de liquide (14), et **en ce qu'**au moins une ligne électrique (15) est formée au moins sur une longueur partielle comme élément chauffant, par exemple comme fil de chauffage ou de résistance pour le chauffage des conduites de liquide (14).

25. Système d'essuie-glace selon l'une quelconque des revendications 20 à 24, **caractérisé par** au moins une ligne électrique (38) s'étendant à l'extérieur de ladite au moins une conduite de liquide (14) pour la fourniture du courant de chauffage à la raclette d'essuie-glace chauffante (5, 5a, 5b).

26. Système d'essuie-glace selon l'une quelconque des revendications 20 à 25, **caractérisé en ce qu'**il est prévu dans ladite au moins une conduite de liquide (14) un élément chauffant électrique formé par au moins une longueur d'un fil chauffant (15).

27. Système d'essuie-glace selon l'une quelconque des revendications 20 à 26, **caractérisé en ce que** le fil chauffant (15) ou l'élément chauffant formé par celui-ci s'étend sur toute la longueur de la conduite de liquide respective (14) entre l'unité de couplage (28, 28a-28c) et une pièce de couplage côté véhicule (41, 42; 45, 46), sur laquelle le fil chauffant (15) ou l'élément chauffant ou aussi un raccord électrique pour cet élément chauffant est conduit hors de la conduite de liquide (14).

28. Système d'essuie-glace selon l'une quelconque des revendications 20 à 27, **caractérisé en ce que** ledit au moins un fil chauffant (15) forme dans au moins une conduite de liquide (14) au moins une boucle de chauffage, notamment avec une portion de fil chauffant conduisant à la raclette d'essuie-glace (5, 5a, 5b) ou à l'unité de couplage (28, 28a-28c) et avec au moins une portion de fil chauffant s'éloignant de la raclette d'essuie-glace (5, 5a, 5b) ou de l'unité de couplage (28, 28a-28c).

29. Système d'essuie-glace selon la revendication 28, **caractérisé en ce que** la portion de fil chauffant qui s'approche et la portion de fil chauffant qui s'éloigne sont prévues dans deux conduites de liquide différentes (14) et sont électriquement reliées l'une à l'autre dans la région de la raclette d'essuie-glace (5, 5a, 5b) ou à l'unité de couplage (28, 28a-28c), et/ou **en ce que** lesdites au moins deux portions de fil chauffant de ladite au moins une boucle de chauffage s'étendent dans une seule et même conduite de liquide (14).

30. Système d'essuie-glace selon l'une quelconque des revendications 20 à 29, **caractérisé en ce que**, dans le cas d'au moins deux bras d'essuie-glace (1) avec chacun au moins une raclette d'essuie-glace (5, 5a, 5b), qui est munie d'au moins deux canaux d'injecteur ou de distributeur (11, 12) et qui est réalisée sous forme de raclette d'essuie-glace chauffante, chaque raclette d'essuie-glace (5, 5a, 5b) ou son adaptateur de raclette d'essuie-glace (6) est raccordée à deux conduites de liquide distinctes (14), et **en ce que** la ligne électrique (15) formant le fil chauffant ou l'élément chauffant est prévue dans chaque conduite de liquide (14).

31. Système d'essuie-glace selon l'une quelconque des revendications 20 à 30, **caractérisé en ce que** les conduites de liquide (14) menant aux raclettes d'essuie-glace (5, 5a, 5b) forment au moins deux groupes avec au moins deux conduites de liquide (14), et **en ce que** les lignes électriques (15) s'étendant respectivement dans une première conduite de liquide (14) des groupes sont menées hors des conduites de liquide (14) à une première pièce de couplage commune côté véhicule (45) et les lignes électriques (15) s'étendant respectivement dans la deuxième conduite de liquide (14) des groupes sont menées hors des conduites de liquide (14) à une deuxième pièce de couplage commune côté véhicule (46).

32. Système d'essuie-glace selon l'une quelconque des revendications 20 à 31, **caractérisé en ce que** ladite au moins une conduite de liquide (14) et/ou ladite au moins une ligne électrique extérieure (15, 38) sont prévues pour s'étendre sur une longueur partielle sur le bras d'essuie-glace (1).

33. Système d'essuie-glace selon l'une quelconque des revendications 20 à 32, **caractérisé en ce que** l'accouplement raclette/bras d'essuie-glace est réalisé selon l'une quelconque des revendications 1 à 15.
